# EUROPEAN PATENT SPECIFICATION

(11) **EP 3 017 624 B1**
(45) Date of publication and mention of the grant of the patent: **22.02.2023**
(21) Application number: 14819997.9
(22) Date of filing: 07.07.2014
(51) Int. Cl.: H04W 28/06, H04L 69/16, H04L 65/1083, H04L 65/80, H04L 65/612, H04L 65/65, H04W 36/00, G06Q 50/10, H04W 8/26

(54) **APPARATUS AND METHOD FOR TRANSMITTING/RECEIVING STREAMING SERVICE DATA IN MOBILE COMMUNICATION NETWORK**
VORRICHTUNG UND VERFAHREN ZUM SENDEN/EMPFANGEN VON STREAMING-DIENST-DATEN IN EINEM MOBILKOMMUNIKATIONSNETZWERK
APPAREIL ET PROCÉDÉ DE TRANSMISSION/RÉCEPTION DE DONNÉES DE SERVICE EN MODE AU FIL DE L'EAU DANS UN RÉSEAU DE COMMUNICATION MOBILE

(30) Priority: 05.07.2013 KR 20130078971
(43) Date of publication of application: 11.05.2016
(73) Proprietor: Samsung Electronics Co., Ltd., Gyeonggi-do 16677 (KR)
(72) Inventor: KWEON, Ki-Suk, Suwon-si Gyeonggi-do, 16677 (KR); LEE, Jin-Sung, Suwon-si Gyeonggi-do, 16677 (KR); PARK, Jung-Shin, Suwon-si, Gyeonggi-do, 16677 (KR); YOON, Kang-Jin, Suwon-si Gyeonggi-do, 16677 (KR); KANG, Jae-Eun, Suwon-si Gyeonggi-do, 16677 (KR)
(74) Representative: Gulde & Partner
(86) International application number: PCT/KR2014/006060
(87) International publication number: WO 2015/002519

(56) References cited:
- US-A1- 2006 251 022
- US-A1- 2007 008 906
- US-A1- 2007 058 587
- US-A1- 2008 207 206
- US-A1- 2011 064 055
- SEOK JOO KOH HEE YOUNG JUNG SUNG HAN KIM JUN SEOB LEE ETRI: "Use of SCTP for Seamless Handover <draft-sjkoh-mobile-sctp-handover-00.txt>; draft-sjkoh-mobile-sctp-handover-00.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, 1 February 2003 (2003-02-01), XP015005307, ISSN: 0000-0004
- NATARAJAN CISCO SYSTEMS P AMER J LEIGHTON UNIVERSITY OF DELAWARE F BAKER CISCO SYSTEMS P: "Using SCTP as a Transport Layer Protocol for HTTP; draft-natarajan-http-over-sctp-02.txt", USING SCTP AS A TRANSPORT LAYER PROTOCOL FOR HTTP; DRAFT-NATARAJAN-HTTP-OVER-SCTP-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 9 July 2009 (2009-07-09), XP015063281, [retrieved on 2009-07-09]
- COSTIN RAICIU ET AL: "Opportunistic mobility with multipath TCP", COMPILATION PROCEEDINGS OF THE 9TH INTERNATIONAL CONFERENCE ON MOBILE SYSTEMS, APPLICATIONS, AND SERVICES & CO-LOCATED WORKSHOPS : NSDR'11, MSC'11, MOBIARCH'11 AND HOTPLANET'11 ; JUNE 28 - JULY 1, 2011, BETHESDA, MD, USA, ACM, NEW YORK; US, 28 June 2011 (2011-06-28), pages 7-12, XP058004540, DOI: 10.1145/1999916.1999919 ISBN: 978-1-4503-0740-6

## Description

### [Technical Field]

The present disclosure relates to an apparatus and method for transmitting/receiving service data in a mobile communication network. More particularly, the present disclosure relates to an apparatus and method for transmitting/receiving streaming service data in a mobile communication network.

### [Background Art]

In a mobile communication network, a user equipment (UE) has mobility, so the mobile communication network should always detect location of the UE, and seamlessly transfer data which is received from an outer network to the UE.

In the mobile communication network, in order to provide a seamless service, a UE performs a handover operation upon moving from a specific Node B into other Node B, and performs a roaming operation upon moving into other network of which a service provider is different. An operation of managing location of a UE in a mobile communication network is a UE mobility managing operation.

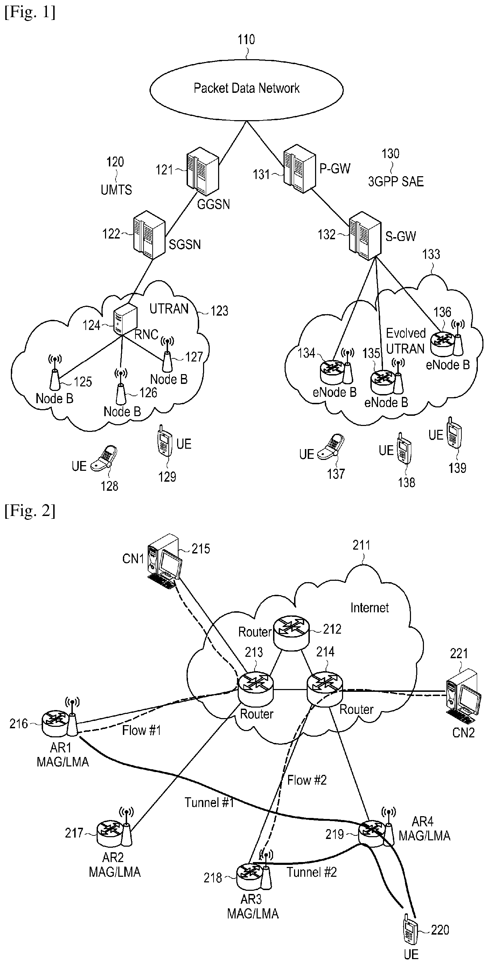

A centralized mobility managing operation in a mobile communication network according to the related art will be described with reference to FIG. 1.

FIG. 1 schematically illustrates a centralized mobility managing operation in a mobile communication network according to the related art.

Referring to FIG. 1, a mobile communication network in FIG. 1 is a mobile communication network which uses a centralized mobility managing scheme which is based on a hierarchical network structure.

The mobile communication network includes a packet data network 110, a universal mobile telecommunications system (UMTS) network 120, and a 3rd generation project partnership (3GPP) system architecture evolution (SAE) network 130.

The UMTS network 120 includes a gateway general packet radio service support node (GGSN) 121, a serving general packet radio service support node (SGSN) 122, a UMTS terrestrial radio access network (UTRAN) 123, and UEs 128 and 129. The UTRAN 123 includes a radio network controller (RNC) 124, and Node Bs 125, 126, and 127.

The SAE network 130 includes a packet data network-gateway (P-GW) 131, a serving-gateway (S-GW) 132, an evolved-UTRAN (E-UTRAN) 133, and UEs 137, 138, and 139. The E-UTRAN 133 includes evolved-Node Bs (eNode Bs) 134, 135, and 136.

In a mobile communication network which uses a centralized scheme as illustrated in FIG. 1, a mobility agent which manages mobility is located at a core network. The mobility agent manages binding information for a UE, and processes data traffic for the UE. In the UMTS network 120, the GGSN 121 becomes a centralized mobility agent. In the 3GPP SAE network 130, the P-GW 131 becomes a centralized mobility agent.

In a centralized mobility managing scheme as described in FIG. 1, the following cases occur. In the first case, there is inefficiency for a routing path, and this will be described below.

Both of traffic which is received in a UE and traffic which is transmitted from the UE should be passed through a centralized mobility agent. However, even though the other UE is physically nearby a related UE, the related UE may experience a relatively shorter communication delay if the related UE directly communicates with the other UE without passing through the centralized mobility agent.

In the second case, an error of a centralized mobility agent may occur, and this will be described below.

In the centralized mobility managing scheme, all traffic is passed through a centralized mobility agent. Consequently, if an error occurs in the centralized mobility agent, a communication for the entire mobile communication network may be paralyzed.

In the third case, traffic is centralized to a core network, and this will be described below.

In the centralized mobility managing scheme, traffic for all UEs is centralized to a core network, so load occurs due to traffic overhead in the core network in terms of scalability for a network and an equipment. Accordingly, a service provider should expand a network and an equipment included in a core network. More particularly, as mobile communication network has evolved to a 5th generation (5G) mobile communication network, load of the core network will significantly increase due to a development of a radio access technology.

A distributed mobility managing scheme has been proposed in order to resolve the cases which occur in the centralized mobility managing scheme. The distributed mobility managing scheme is appropriate for a trend that a mobile communication network structure is evolved from a hierarchical structure into a flat structure. The distributed mobility managing scheme does not allocate a mobile agent function to a core network, and distributes the mobile agent function to a radio access network.

A distributed mobility managing operation in a mobile communication network according to the related art will be described with reference to FIG. 2.

FIG. 2 schematically illustrates a distributed mobility managing operation in a mobile communication network according to the related art.

Referring to FIG. 2, a mobile communication network in FIG. 2 is a mobile communication network which uses a distributed mobility managing scheme which is based on a proxy mobile internet protocol (PMIP) proposed in an internet engineering task force (IETF).

The mobile communication network includes an internet 211, a corresponding node (CN)1 215, an access router (AR)1 216, an AR2 217, an AR3 218, an AR4 219, a UE 220, and a CN2 221. Each of the AR1 216, the AR2 217, the AR3 218, and the AR4 219 includes a mobile access gateway (MAG)/local mobility anchor (LMA) function. The internet 211 includes routers (e.g., a router 212, a router 213, and a router 214).

In FIG. 2, an LMA which corresponds to a centralized mobile agent as described in FIG. 1 is located at a plurality of AR/MAGs. Whenever changing a point of attachment (PoA), the UE 220 is allocated a new internet protocol (IP) address from the LMA, and establishes a new session using an address which is allocated from a related PoA.

If the UE 220 accesses the AR1 216, the UE 220 establishes a session flow #1 with the CN1 215 using an address which is allocated from a related LMA. If the UE 220 accesses the AR3 218, the UE 220 establishes a session flow #2 with the CN2 221 using an address which is allocated from a related LMA. An LMA which is located at each AR performs an operation of transmitting a packet which is received in each session to the UE 220.

If the UE 220 changes a PoA, an LMA which anchors each session should know a new PoA for the UE 220 in order to guarantee IP session continuity. The IP session continuity means that a UE may seamlessly receive data which is received from an old session even though changing a PoA.

In FIG. 2, in order to transmit data which is received from a session flow #1 and a session flow #2, LMAs which anchor each session establish a tunnel with an MAG which is located at a current PoA for the UE 220, and forward data through the established tunnel. For this, each LMA should know an IP address which is currently allocated to the UE 220. Each LMA may know the IP address through a binding update operation between an anchoring LMA and a new PoA. For example, if the PoA is changed according that the UE 220 moves, a related MAG should transmit information on the IP address which is newly allocated to an LMA which anchors a session of the UE 220.

As a mobile communication network has rapidly been evolved and smart phones have come into wide use, the use for mobile data has rapidly increased. Specially, a proportion of video traffic among mobile traffic is the highest, and video traffic is expected that to account for 66% of the entire mobile traffic in 2014 according to Cisco Visual Networking Index data.

In a mobile communication network, the most widely used video streaming services are a service which is provided in a YouTube^{©} site and a service which is provided in a Netflix^{©} site. The YouTube^{©} site and the Netflix^{©} site provide an HTTP based video streaming service. A reason why the HTTP based video streaming service is preferred to a conventional video streaming protocol will be described below.

Firstly, cost of the HTTP based video streaming service is lower than cost of the conventional video streaming protocol. The HTTP based video streaming service downloads data using an HTTP protocol. As a result, the HTTP based video streaming service does not request a specific protocol to a UE and a server provides only a Web service.

Secondly, the HTTP based video streaming service may easily pass through a firewall compared to the conventional video streaming protocol. Currently, a plurality of sites block ports other than well-known ports using the firewall. Conventional streaming protocols use a user datagram protocol (UDP) to use a specific port, so there is high probability that the conventional streaming protocols will be blocked by the firewall. In contrast, an HTTP based video streaming protocol uses a port 80 which is well known. Consequently, the HTTP based video streaming protocol may easily pass through the firewall.

Thirdly, in order to reduce load of a server or provide fast data transmission, a proxy server or a cache server has been generally used, and it is easy to use the proxy server or the cache server because a simple Web server is necessary for providing the HTTP based video streaming service.

Meanwhile, HTTP based video streaming protocols which are the most widely used includes an HTTP progressive download (PL) protocol and an HTTP adaptive streaming (AS) protocol. The HTTP PL protocol and the HTTP AL protocol are different from a general HTTP protocol in an aspect that a communication state of a UE is reported to a server and the server provides a quality of service (QoS), and other aspects are similar to the general HTTP protocol.

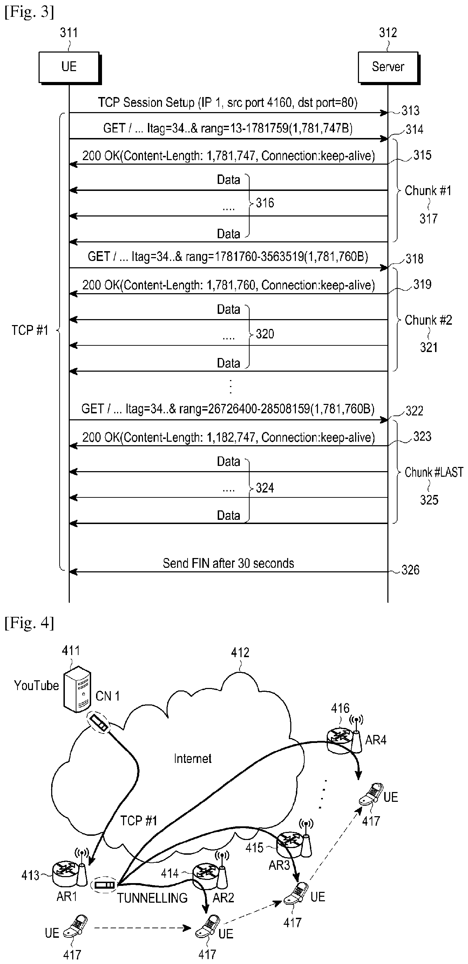

A process of transmitting/receiving data using an HTTP based video streaming protocol in a mobile communication network according to the related art will be described with reference to FIG. 3.

FIG. 3 schematically illustrates a process of transmitting/receiving data using an HTTP based video streaming protocol in a mobile communication network according to the related art.

Referring to FIG. 3, the mobile communication network includes a UE 311 and a server 312. The UE 311 establishes a transmission control protocol (TCP) session with the server 312 at operation 313. The TCP session includes an IP address, a source port, and a destination port. In the TCP session, the IP address is set to "IP1", the source port is set to "4160", and the destination port is set to "80". The UE 311 requests a specific streaming file (Itag=34) and a specific range of data (range=13-1781759) to the server 312 on a chunk basis using an HTTP GET message at operation 314. Each of the Itag and the range is a request uniform resource identifier (URI).

After receiving the HTTP GET message from the UE 311, the server 312 transmits an HTTP 200 OK message to the UE 311 at operation 315, and transmits data which the UE 311 requests along with the HTTP 200 OK message to the UE 311 at operation 316. The HTTP 200 OK message includes a content-length field and a connection field. A field value of the connection field included in the HTTP 200 OK message is set to "keep-alive", so the TCP session is not released until transmission of data corresponding to one chunk is completed. The HTTP 200 OK message and the next data transmissions become one chunk (e.g., a chunk #1) at operation 317. Data transmission is performed many times, and this is why a size of one chunk in FIG. 3 is about 1.7MB.

The UE 311 requests a specific streaming file (Itag=34) and a specific range of data (range=1781760-3563519) to the server 312 on a chunk basis using an HTTP GET message at operation 318. After receiving the HTTP GET message from the UE 311, the server 312 transmits an HTTP 200 OK message to the UE 311 at operation 319, and transmits data which the UE 311 requests along with the HTTP 200 OK message to the UE 311 at operation 320. A field value of a connection field included in the HTTP 200 OK message is set to "keep-alive", so a TCP session is not released until transmission of data corresponding to one chunk is completed. The HTTP 200 OK message and the next data transmissions become one chunk (e.g., a chunk #2) at operation 321. Data transmission is performed many times, and this is why a size of one chunk in FIG. 3 is about 1.7MB.

In this way, data transmission/reception is performed, the UE 311 finally requests a specific streaming file (Itag=34) and a specific range of data (range=26726400-28508159) to the server 312 on a chunk basis using an HTTP GET message at operation 322. After receiving the HTTP GET message from the UE 311, the server 312 transmits an HTTP 200 OK message to the UE 311 at operation 323, and transmits data which the UE 311 requests along with the HTTP 200 OK message to the UE 311 at operation 324. A field value of a connection field included in the HTTP 200 OK message is set to "keep-alive", so a TCP session is not released until transmission of data corresponding to one chunk is completed. The HTTP 200 OK message and the next data transmissions become one chunk (e.g., the last chunk) at operation 325. Data transmission is performed many times, and this is why a size of one chunk in FIG. 3 is about 1.7MB.

After transmitting all chunks, the server 312 transmits a FIN message to the UE 311 if there is no packet transmission/reception through the TCP session which is established with the UE 311 during preset time (e.g., 30 seconds), so the TCP session which is established between the UE 311 and the server 312 is released at operation 326.

As described above, the UE 311 requests transmission of data to the server 312 on a chunk basis, and the server 312 transmits the data in response to the data transmission request to the UE 311. The HTTP 200 OK message may transmit all data on a chunk basis using one TCP session by setting a field value of a connection field to "keep-alive".

Meanwhile, a HTTP based streaming protocol is a stateless service. A server does not know information about a UE and information related to providing a video streaming service such as session information, and the UE should inform the server of a data file name which the UE requests and information about a part of data which the UE wants to receive whenever the UE requests to transmit data to the server. Because the HTTP based streaming protocol guarantees mobility of the UE in an upper layer, the HTTP based streaming protocol does not request IP session continuity.

Further, in the distributed mobility managing scheme, in order to guarantee IP session continuity, a UE registers a new PoA of the UE at an anchoring AR through a binding update operation whenever the UE changes a PoA. Then, traffic which targets the UE is transferred to a current anchoring AR through an old anchoring AR based on a tunneling.

However, this data traffic transfer scheme may not provide an advantage of path optimization to the UE. This is why a video streaming service is provided during relatively long time. Particularly, if a user moves as riding on mobile means such as a bus or a vehicle, a distance from an old anchoring AR to a current PoA will become very long, so the video streaming service will be provided during relatively long time.

A situation which may occur in a case that a mobile communication network according to the related art manages a mobility of a UE using a distributed mobility managing scheme will be described with reference to FIG. 4.

FIG. 4 schematically illustrates a situation which may occur in a case that a mobile communication network manages a mobility of a UE using a distributed mobility managing scheme according to the related art.

Referring to FIG. 4, the mobile communication network includes a CN1 411, an internet 412, an AR1 413, an AR2 414, an AR3 415, an AR4 416, and a UE 417.

In FIG. 4, it will be assumed that the UE 417 which establishes a TCP session for video traffic with the CN1 411 through the AR1 413 continuously moves, and currently receives the video traffic by setting the AR4 416 as a PoA.

In FIG. 4, the UE 417 currently receives video traffic through the AR4 416 as a current PoA AR after setting the AR1 413 as an initial anchoring AR and changing a PoA AR three times, this may result in disrupting optimal path establishment between the CN1 411 and the UE 417, so the UE 417 undergoes long transmission delay.

As described above, for both a case that a mobile communication network uses a centralized mobility managing scheme and a case that the mobile communication network uses a distributed mobility managing scheme, it may be difficult to effectively provide an HTTP based streaming service.

S. J. KOH et al. discloses in "Use of SCTP for Seamless Handover", 1. February 2003, XP015005307, a method for providing seamless handover using the unique multihoming feature of an SCTP protocol. Therein the multihoming feature allows a mobile node to bind multiple IP addresses to its network interface. The use of TCP or HTTP or handover controlled by access nodes are not disclosed.

Costin Raiciu et al. discloses in "Opportunistic 1-15 mobility with multipath TCP" 28 June 2011 (2011-06-28). pages 7-12.XP058004540, a mobility architecture based on MPTCP that can naturally shield the application layer from lower layer handoff implementations IP address change, and all the issues related to multiple interfaces and carriers.

Accordingly, there is a need for effectively providing a seamless HTTP based streaming service without transmission delay.

As described above, for both a case that a mobile communication network uses a centralized mobility managing scheme and a case that the mobile communication network uses a distributed mobility managing scheme, a UE requests data to a service on a chunk basis and the server provides the data to the UE corresponding to the data request. In this case, it may be difficult for the UE to use an optimal data transmission path before completing reception of the data which is provided from the server on the chunk basis. For example, even though the optimal data transmission path may be changed according to the movement of the UE, it may be difficult for the UE to use the optimal data transmission path due to the reception of the data which is the chunk basis before completing the reception of the data which is provided from the server on the chunk basis.

Accordingly, there is a need for providing an HTTP based streaming service through an optimal data transmission path in which a movement state of a UE is reflected in a mobile communication network.

The above information is presented as background information only to assist with an understanding of the present disclosure. No determination has been made, and no assertion is made, as to whether any of the above might be applicable as prior art with regard to the present disclosure.

### [Disclosure]

### [Technical Problem]

Aspects of the present disclosure are to address at least the above-mentioned problems and/or disadvantages and to provide at least the advantages described below. Accordingly, an aspect of the present disclosure is to provide an apparatus and method for providing a streaming service in a mobile communication network which uses a distributed mobility managing scheme.

Another aspect of the present disclosure is to provide an apparatus and method for providing a streaming service thereby guaranteeing Internet Protocol (IP) session continuity in a mobile communication network which uses a distributed mobility managing scheme.

Another aspect of the present disclosure is to provide an apparatus and method for providing a streaming service thereby guaranteeing to provide a seamless streaming service in a mobile communication network which uses a distributed mobility managing scheme. Another aspect of the present disclosure is to provide an apparatus and method for providing a streaming service thereby optimizing a data transmitting path in a mobile communication network which uses a distributed mobility managing scheme.

Another aspect of the present disclosure is to provide an apparatus and method for providing a streaming service thereby decreasing data transmitting delay in a mobile communication network which uses a distributed mobility managing scheme.

Another aspect of the present disclosure is to provide an apparatus and method for providing a streaming service thereby omitting a conventional procedure which is performed whenever an AR is changed in a mobile communication network which uses a distributed mobility managing scheme.

Another aspect of the present disclosure is to provide an apparatus and method for providing a streaming service thereby reflecting a movement state of a UE in a mobile communication network which uses a distributed mobility managing scheme.

Another aspect of the present disclosure is to provide an apparatus and method for providing a streaming service thereby optimizing a data transmission path by reflecting a movement state of a UE in a mobile communication network which uses a distributed mobility managing scheme.

### [Technical Solution]

In accordance with an aspect of the present disclosure, a user equipment (UE) in a mobile communication network is provided. The UE is configured to receive a second internet protocol, IP, address from a second access router, AR, if the UE is handed over to the second AR upon detecting that the UE moves from a first AR to the second AR while receiving streaming service data from the first AR through a first transmission control protocol, TCP, session established with a corresponding node, CN, based on a first IP address through the first AR. The UE is configured to establish a second TCP session with the CN based on the second IP address through the second AR. The UE is further configured to await until a reception of a data unit is completed if the reception of the data unit is not completed, wherein the data unit is included in the streaming service data which the UE has received before the handover has been completed. The UE is further configured to switch from the first TCP session to the second TCP session upon detecting the completion of the reception of the data unit and receiving the streaming service data from the CN through the second TCP session.

In accordance with another aspect of the present disclosure, provided a first AR in a mobile communication network is provided which is defined by the appended claims.

In accordance with another aspect of the present disclosure, a second AR in a mobile communication network is provided which is defined by the appended claims.

In accordance with another aspect of the present disclosure, a CN in a mobile communication network is provided which is defined by the appended claims.

In accordance with another aspect of the present disclosure, there is provided a method for receiving streaming service data in a UE in a mobile communication network. The method includes
receiving a second internet protocol, IP, address from a second access router, AR, if the UE is handed over to the second AR upon detecting that the UE moves from a first AR to the second AR while receiving streaming service data from the first AR through a first transmission control protocol, TCP, session established with a corresponding node, CN, based on a first IP address through the first AR, ;
establishing a second TCP session with the CN based on the second IP address through the second AR; awaiting until a reception of a data unit is completed if the reception of the data unit is not completed, wherein the data unit is included in the streaming service data which the UE has received before the handover has been completed; switching from the first TCP session to the second TCP session upon detecting the completion of the reception of the data unit; and receiving the streaming service data from the CN through the second TCP session.

In accordance with another aspect of the present disclosure, there is provided a method for transmitting streaming service data to a UE in a first AR in a mobile communication network which is defined by the appended claims. In accordance with another aspect of the present disclosure, there is provided a method for transmitting streaming service data to a UE in a second AR in a mobile communication network which is defined by the appended claims. In accordance with another aspect of the present disclosure, there is provided a method for transmitting streaming service data to a UE in a CN in a mobile communication network which is defined by the appended claims. Other aspects, advantages, and salient features of the disclosure will become apparent to those skilled in the art from the following detailed description, which, taken in conjunction with the annexed drawings, discloses various embodiments of the present disclosure.

### [Advantageous Effects]

As is apparent from the foregoing description, various embodiments of the present disclosure enable to provide a streaming service thereby guaranteeing IP session continuity in a mobile communication network which uses a distributed mobility managing scheme.

Various embodiments of the present disclosure enable to provide a streaming service thereby guaranteeing to provide a seamless streaming service in a mobile communication network which uses a distributed mobility managing scheme.

Various embodiments of the present disclosure enable to provide a streaming service thereby optimizing a data transmitting path in a mobile communication network which uses a distributed mobility managing scheme.

Various embodiments of the present disclosure enable to provide a streaming service thereby decreasing data transmitting delay in a mobile communication network which uses a distributed mobility managing scheme.

Various embodiments of the present disclosure enable to provide a streaming service thereby omitting a procedure according to the related art which is performed whenever an AR is changed in a mobile communication network which uses a distributed mobility managing scheme.

Various embodiments of the present disclosure enable to provide a streaming service thereby reflecting a movement state of a UE in a mobile communication network which uses a distributed mobility managing scheme.

Various embodiments of the present disclosure enable to provide a streaming service thereby optimizing a data transmission path by reflecting a movement state of a UE in a mobile communication network which uses a distributed mobility managing scheme.

### [Description of Drawings]

The above and other aspects, features, and advantages of certain embodiments of the present disclosure will be more apparent from the following description taken in conjunction with the accompanying drawings, in which:
FIG. 1 schematically illustrates a centralized mobility managing operation in a mobile communication network according to the related art;
FIG. 2 schematically illustrates a distributed mobility managing operation in a mobile communication network according to the related art;
FIG. 3 schematically illustrates a process of transmitting/receiving data using an hypertext transfer protocol (HTTP) based video streaming protocol in a mobile communication network according to the related art;
FIG. 4 schematically illustrates a situation which may occur in a case that a mobile communication network manages a mobility of a user equipment (UE) using a distributed mobility managing scheme according to the related art;
FIG. 5 schematically illustrates an inner structure of a UE in a mobile communication network which uses a distributed mobility managing scheme according to an embodiment of the present disclosure;
FIG. 6 schematically illustrates a process of providing an HTTP based video streaming service in a mobile communication network which uses a distributed mobility managing scheme according to an embodiment of the present disclosure;
FIG. 7 schematically illustrates an example of an operating process of a UE in a mobile communication network which uses a distributed mobility managing scheme according to an embodiment of the present disclosure;
FIG. 8 schematically illustrates a process of providing an HTTP based video streaming service in each entity in a mobile communication network which uses a distributed mobility managing scheme according to an embodiment of the present disclosure;
FIG. 9 schematically illustrates a use state of an optimal data transmission path for a UE in a case that each entity provides an HTTP based video streaming service with a scheme such as, for example, the scheme illustrated in FIG. 8 in a mobile communication network which uses a distributed mobility managing scheme according to an embodiment of the present disclosure;
FIG. 10 schematically illustrates an example of a process of transmitting/receiving data using an HTTP based video streaming protocol in a mobile communication network according to an embodiment of the present disclosure;
FIG. 11 schematically illustrates a process of optimizing a data transmission path by reflecting a movement state of a UE in a case that the UE moves in a mobile communication network according to an embodiment of the present disclosure;
FIG. 12 schematically illustrates an example of a process of transmitting/receiving data using an HTTP based video streaming protocol in a mobile communication network according to an embodiment of the present disclosure;
FIGS. 13a and 13b schematically illustrate an example of an operating process of a UE in a mobile communication network which uses a distributed mobility managing scheme according to an embodiment of the present disclosure;
FIG. 14 schematically illustrates an inner structure of a UE in a mobile communication network according to an embodiment of the present disclosure;
FIG. 15 schematically illustrates an inner structure of an access router (AR) in a mobile communication network according to an embodiment of the present disclosure; and
FIG. 16 schematically illustrates an inner structure of a corresponding node (CN) in a mobile communication network according to an embodiment of the present disclosure.

Throughout the drawings, it should be noted that like reference numbers are used to depict the same or similar elements, features, and structures.

### [Mode for Invention]

The scope of the invention is defined by the appended claims.

The following description with reference to the accompanying drawings is provided to assist in a comprehensive understanding of various embodiments of the present disclosure as defined by the claims.

In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims

It is to be understood that the singular forms "a," "an," and "the" include plural referents unless the context clearly dictates otherwise. Thus, for example, reference to "a component surface" includes reference to one or more of such surfaces.

Although ordinal numbers such as "first," "second," and so forth will be used to describe various components, those components are not limited herein. The terms are used only for distinguishing one component from another component. For example, a first component may be referred to as a second component and likewise, a second component may also be referred to as a first component, without departing from the teaching of the inventive concept. The term "and/or" used herein includes any and all combinations of one or more of the associated listed items.

The terminology used herein is for the purpose of describing various embodiments only and is not intended to be limiting. As used herein, the singular forms are intended to include the plural forms as well, unless the context clearly indicates otherwise. It will be further understood that the terms "comprises" and/or "has," when used in this specification, specify the presence of a stated feature, number, step, operation, component, element, or combination thereof, but do not preclude the presence or addition of one or more other features, numbers, steps, operations, components, elements, or combinations thereof.

The terms used herein, including technical and scientific terms, have the same meanings as terms that are generally understood by those skilled in the art, as long as the terms are not differently defined. It should be understood that terms defined in a generally-used dictionary have meanings coinciding with those of terms in the related technology.

According to various embodiments of the present disclosure, an electronic device may include communication functionality. For example, an electronic device may be a smart phone, a tablet personal computer (PC), a mobile phone, a video phone, an e-book reader, a desktop PC, a laptop PC, a netbook PC, a personal digital assistant (PDA), a portable multimedia player (PMP), an mp3 player, a mobile medical device, a camera, a wearable device (e.g., a head-mounted device (HMD), electronic clothes, electronic braces, an electronic necklace, an electronic appcessory, an electronic tattoo, or a smart watch), and/or the like.

According to various embodiments of the present disclosure, an electronic device may be a smart home appliance with communication functionality. A smart home appliance may be, for example, a television, a digital video disk (DVD) player, an audio, a refrigerator, an air conditioner, a vacuum cleaner, an oven, a microwave oven, a washer, a dryer, an air purifier, a set-top box, a TV box (e.g., Samsung HomeSyncTM, Apple TVTM, or Google TVTM), a gaming console, an electronic dictionary, an electronic key, a camcorder, an electronic picture frame, and/or the like.

According to various embodiments of the present disclosure, an electronic device may be a medical device (e.g., magnetic resonance angiography (MRA) device, a magnetic resonance imaging (MRI) device, computed tomography (CT) device, an imaging device, or an ultrasonic device), a navigation device, a global positioning system (GPS) receiver, an event data recorder (EDR), a flight data recorder (FDR), an automotive infotainment device, a naval electronic device (e.g., naval navigation device, gyroscope, or compass), an avionic electronic device, a security device, an industrial or consumer robot, and/or the like. According to various embodiments of the present disclosure, an electronic device may be furniture, part of a building/structure, an electronic board, electronic signature receiving device, a projector, various measuring devices (e.g., water, electricity, gas or electro-magnetic wave measuring devices), and/or the like that include communication functionality.

According to various embodiments of the present disclosure, an electronic device may be any combination of the foregoing devices. In addition, it will be apparent to one having ordinary skill in the art that an electronic device according to various embodiments of the present disclosure is not limited to the foregoing devices.

According to various embodiments of the present disclosure, a user equipment (UE) may be an electronic device.

An embodiment of the present disclosure proposes an apparatus, method, and system for providing a streaming service in a mobile communication network which uses a distributed mobility managing scheme.

An embodiment of the present disclosure proposes an apparatus, method, and system for providing a streaming service thereby guaranteeing internet protocol (IP) session continuity in a mobile communication network which uses a distributed mobility managing scheme.

An embodiment of the present disclosure proposes an apparatus, method, and system for providing a streaming service thereby guaranteeing to provide a seamless streaming service in a mobile communication network which uses a distributed mobility managing scheme.

An embodiment of the present disclosure proposes an apparatus, method, and system for providing a streaming service thereby optimizing a data transmitting path in a mobile communication network which uses a distributed mobility managing scheme.

An embodiment of the present disclosure proposes an apparatus, method, and system for providing a streaming service thereby decreasing data transmitting delay in a mobile communication network which uses a distributed mobility managing scheme.

An embodiment of the present disclosure proposes an apparatus, method, and system for providing a streaming service thereby omitting a procedure according to the related art which is performed whenever an AR is changed in a mobile communication network which uses a distributed mobility managing scheme.

An embodiment of the present disclosure proposes an apparatus, method, and system for providing a streaming service thereby reflecting a movement state of a UE in a mobile communication network which uses a distributed mobility managing scheme.

An embodiment of the present disclosure proposes an apparatus, method, and system for providing a streaming service thereby optimizing a data transmission path by reflecting a movement state of a UE in a mobile communication network which uses a distributed mobility managing scheme.

According to various embodiments of the present disclosure, it will be assumed that a mobile communication network uses a distributed mobility managing scheme as a mobility managing scheme. However, those of ordinary skill in the art will understand that the mobile communication network may use another mobility managing scheme.

According to various embodiments of the present disclosure, it will be assumed that a streaming service is a hypertext transfer protocol (HTTP) based streaming service. However, those of ordinary skill in the art will understand that the streaming service may be other streaming service with another format.

A method and apparatus proposed in various embodiments of the present disclosure may be applied to various communication systems such as a long term evolution (LTE) system, an LTE-advanced (LTE-A) system, a high speed downlink packet access (HSDPA) mobile communication system, a high speed uplink packet access (HSUPA) mobile communication system, a high rate packet data (HRPD) mobile communication system proposed in a 3rd generation project partnership 2 (3GPP2), a wideband code division multiple access (WCDMA) mobile communication system proposed in the 3GPP2, a code division multiple access (CDMA) mobile communication system proposed in the 3GPP2, an institute of electrical and electronics engineers (IEEE) mobile communication system, an evolved packet system (EPS), a mobile internet protocol (Mobile IP) system, and/or the like.

An embodiment of the present disclosure proposes an apparatus, method, and system for providing an HTTP based streaming service in a mobile communication network which uses a distributed mobility managing scheme, and this will be described below.

If a mobile communication network uses a distributed mobility managing scheme according to the related art, the mobile communication network guarantees IP session continuity for each of all sessions. However, for several IP sessions, if an IP as a lower protocol guarantees session continuity for the several IP sessions even though a upper protocol guarantees the session continuity for the several IP sessions, an error may occur because both an operation of guaranteeing the session continuity for the several IP sessions in the upper layer and an operation of guaranteeing the session continuity for the several IP sessions in the lower layer are performed.

An embodiment of the present disclosure proposes an apparatus, method, and system for providing a streaming service (e.g., an HTTP based video streaming service) which currently accounts for 70% of mobile traffic in a mobile communication network.

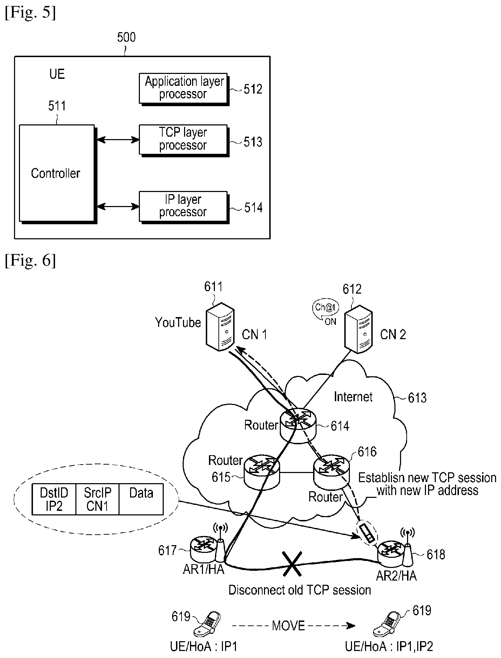

An inner structure of a UE in a mobile communication network which uses a distributed mobility managing scheme according to an embodiment of the present disclosure will be described with reference to FIG. 5.

FIG. 5 schematically illustrates an inner structure of a UE in a mobile communication network which uses a distributed mobility managing scheme according to an embodiment of the present disclosure.

Referring to FIG. 5, a UE 500 includes a controller 511, an application layer processor 512, a transmission control protocol (TCP) layer processor 513, and an internet protocol (IP) layer processor 514.

The controller 511 detects an HTTP based video streaming service, releases an old TCP session, and establishes a new TCP session. The controller 511 provides an interface with the TCP layer processor 513 and the IP layer processor 514. The controller 511 determines whether the UE 500 moves, and determines whether the UE 500 receives the HTTP based video streaming service upon detecting that the UE 500 moves. Upon detecting that the UE 500 moves, the controller 511 establishes a TCP session with a server (e.g., a video streaming server) using an IP address which is newly assigned according to movement of the UE 500, and changes a new point of attachment (PoA) from old TCP session to a newly established TCP session.

The TCP layer processor 513 processes a TCP related operation under a control of the controller 511.

The IP layer processor 514 processes an IP related operation under a control of the controller 511.

Although the controller 511, the application layer processor 512, the TCP layer processor 513, and the IP layer processor 514 are described as separate processors, it is to be understood that this is merely for convenience of description. In other words, two or more of the controller 511, the application layer processor 512, the TCP layer processor 513, and the IP layer processor 514 may be incorporated into a single processor.

An inner structure of a UE in a mobile communication network which uses a distributed mobility managing scheme according to an embodiment of the present disclosure has been described with reference to FIG. 5, and a process of providing an HTTP based video streaming service in a mobile communication network which uses a distributed mobility managing scheme according to an embodiment of the present disclosure will be described with reference to FIG. 6.

FIG. 6 schematically illustrates a process of providing an HTTP based video streaming service in a mobile communication network which uses a distributed mobility managing scheme according to an embodiment of the present disclosure.

Referring to FIG. 6, the mobile communication network includes a corresponding node (CN) 1 611, a CN2 612, an internet 613, an AR1 617, an AR2 618, and a UE 619. The AR1 617 and the AR2 618 perform a home agent (HA) function for the UE 619. The internet 613 includes a router1 614, a router2 615, and a router3 616.

For example, it will be assumed that the CN1 611 and the CN2 612 are streaming servers. More particularly, for example, it will be assumed that the CN1 611 is a YouTube^{©} server.

As illustrated in FIG. 6, the UE 619 moves from the AR1 617 to the AR2 618, so the UE 619 establishes a new TCP session with a server (e.g., the CN1 611) using an IP2 as an IP address which is allocated by the AR2 618. For example, it will be assumed that a home of address (HoA) which is allocated by the AR1 617 is an IP1, and a HoA which is allocated by the AR2 618 is the IP2.

After the UE 619 establishes the new TCP session with the CN1 611, traffic that an application occurs is transmitted using the new established TCP session, and a TCP session which is established using the IP1 as an old IP address is released. Because the traffic is transmitted using the newly established TCP session, the UE 619 may perform a communication with a server (e.g., the CN1 611) through an optimized path. This will be described below.

A streaming program which runs in the UE 619 initially acquires an IP address of a streaming server through a domain name system (DNS) query message. According to various embodiments of the present disclosure, the IP address of the streaming server is acquired through the DNS query message. However, those of ordinary skill in the art will understand that the IP address of the streaming server may be acquired through other messages. A controller included in the UE 619 (not shown in FIG. 6) recognizes that the UE 619 uses a streaming server using the IP address of the streaming server which is acquired through the DNS query message (e.g., the CN1 611).

If the UE 619 moves (e.g., the UE 619 moves from the AR1 617 to the AR2 619), the UE 619 simultaneously acquires two IP addresses (e.g., the IP1 and the IP2), so an IP layer processor (not shown in FIG. 6) included in the UE 619 informs the controller of information about the two acquired IP addresses.

The controller controls the TCP layer processor to establish a new TCP session which uses the IP2 with the streaming server.

At a timing point at which the UE 619 establishes a new TCP session using the IP2 with the streaming server, if the UE 619 transmits/receives data with the streaming server (e.g., the CN1 611), the UE 619 suspends establishment of the new TCP session until the data transmission/reception is completed.

For example, if the streaming program requests to transmit new data (e.g., a chunk #2) to a TCP layer processor included in the UE 619 using an HTTP GET message, the TCP layer processor transfers the request for the new data to the CN1 611 through a TCP session 2 as a TCP session which passes through the UE 611 and the AR2 618 not a TCP session 1 as a TCP session which passes through the UE 611 and the AR1 617 through a socket switching operation. According to various embodiments of the present disclosure, the streaming program requests the new data to the TCP layer processor included in the UE 619 using the HTTP GET message. However, those of ordinary skill in the art will understand that the streaming program may request the new data to the TCP layer processor included in the UE 619 using other messages. Because the TCP layer processor transmits the request for the new data through the TCP session 2 not the TCP session 1, a seamless TCP switching operation becomes possible.

After performing the TCP switching operation, the UE 611 releases the TCP session 1 as an old TCP session, and receives data through the TCP session 2 as a new TCP session. Further, if there is no session which is established using the IP1 after performing the TCP switching operation, the UE 611 returns the IP1 to the AR1 617. The tunnel which is established between the AR1 617 and the AR2 618 is released.

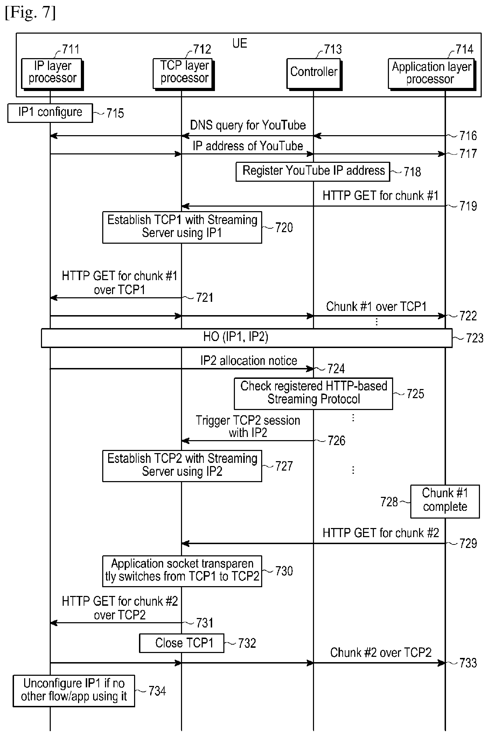

A process of providing an HTTP based video streaming service in a mobile communication network which uses a distributed mobility managing scheme according to an embodiment of the present disclosure has been described with reference to FIG. 6, and an example of an operating process of a UE in a mobile communication network which uses a distributed mobility managing scheme according to an embodiment of the present disclosure will be described with reference to FIG. 7.

FIG. 7 schematically illustrates an example of an operating process of a UE in a mobile communication network which uses a distributed mobility managing scheme according to an embodiment of the present disclosure.

Referring to FIG. 7, it will be noted that an operating process of a UE in a mobile communication network which uses a distributed mobility managing scheme in FIG. 7 is an operating process of a UE in a case that it will be assumed that the mobile communication network uses a distributed mobility managing scheme as described in FIG. 6.

Referring to FIG. 7, the UE 619 includes an IP layer processor 711, a TCP layer processor 712, a controller 713, and an application layer processor 714.

After the IP layer processor 711 configures an IP1 at operation 715, an application program of the application layer processor 714 (e.g., a streaming program) requests an IP address of a streaming server using a DNS query message in order to acquire an IP address of a site which the application layer processor 714 will access at operation 716. For example, the application layer processor 714 transmits the DNS query message to the TCP layer processor 712 through the controller 713. After receiving the DNS query message from the application layer processor 714, the TCP layer processor 712 transmits the DNS query message to the IP layer processor 711.

After receiving the DNS query message, the IP layer processor 711 transfers an IP address of the streaming server using a DNS answer message as an answer message to the DNS query message to the controller 713 and the application layer processor 714 through the TCP layer processor 712 at operation 717. For example, it will be assumed that the streaming server is a YouTube^{©} server (e.g., a CN1 611).

After receiving the DNS answer message including the IP address of the streaming server through the TCP layer processor 712, the controller 713 detects that the UE 619 uses an HTTP based streaming service through the DNS answer message, and registers the received IP address of the streaming server at operation 718.

According to various embodiments of the present disclosure, it is detected that the UE 619 uses the HTTP based streaming service based on a DNS (e.g., an operation of transmitting the DNS query message and an operation of receiving the DNS answer message). However, it will be understood by those of ordinary skill in the art that it may be detected that the UE 619 uses the HTTP based streaming service using a deep packet inspection (DPI) scheme, a 5 tuple based scheme, a scheme in which an application program directly registers that the UE 619 uses the HTTP based streaming service, and/or the like. A detailed description of an operation of detecting that the UE 619 uses the HTTP based streaming service will be omitted herein.

The application layer processor 714 requests a chunk #1 to the TCP layer processor 712 using an HTTP GET message at operation 719. After receiving the HTTP GET message from the application layer processor 714, the TCP layer processor 712 establishes a TCP session (e.g., a TCP session 1) with the streaming server (e.g., a CN1 611) using the IP1 at operation 720. The TCP layer processor 712 requests the chunk #1 to the IP layer processor 711 using an HTTP GET message at operation 721. After receiving the HTTP GET message from the TCP layer processor 712, the IP layer processor 711 transfers a related chunk (e.g., the chunk #1) to the application layer processor 714 through the TCP session 1 though the TCP layer processor 712 and the controller 713 at operation 722.

Although receiving the chunk #1 through the controller 713, the UE 619 moves from the AR1 617 to the AR2 618 (e.g., the UE 611 hands over from the AR1 617 to the AR2 618), the UE 619 is additionally assigned an IP2 at operation 723. After the IP2 is additionally allocated to the UE 619, the IP layer processor 711 notifies to the controller 713 that a new IP address is allocated to the UE 619 at operation 724.

After receiving the notification indicating that the new IP address is allocated to the UE 619, the controller 713 determines whether there is a registered HTTP based streaming service at operation 725. In FIG. 7, the UE 619 has already received the HTTP based streaming service, so the controller 713 generates a trigger for the TCP layer processor 712 which requests to establish a new session (e.g., a TCP session 2) using the IP2 at operation 726. After receiving the request for establishing the new session from the controller 713, the TCP layer processor 712 establishes the TCP session 2 with the streaming server (e.g., the CN1 611) using the IP2 at operation 727.

After detecting that reception of data for the chunk #1 is completed at operation 728, the application layer processor 714 requests a chunk #2 to the TCP layer processor 712 using an HTTP GET message at operation 729. After receiving the HTTP GET message from the application layer processor 714, the TCP layer processor 712 performs a socket switching operation from the TCP session 1 to the TCP session 2 at operation 730. For example, the TCP layer processor 712 changes a socket which an application program uses from the TCP session 1 to the TCP session 2. The socket switching operation is performed under a control of the controller 713.

After performing the application socket switching operation from the TCP session 1 to the TCP session 2, the TCP layer processor 712 requests the chunk #2 to the IP layer processor 711 using an HTTP GET message through the TPC session 2 at operation 731. The TCP layer processor 712 releases the TCP session 1 at operation 732.

After receiving the HTTP GET message from the TCP layer processor 712, the IP layer processor 711 transfers a related chunk (e.g., the chunk #2) to the application layer processor 714 through the TCP session 2 through the TCP layer processor 712 and the controller 713 at operation 733.

If there is no IP session which is established using the IP1 after the application socket switching operation is performed, the IP layer processor 711 returns the IP1 to the AR1 617. The tunnel which has been established between the AR1 617 and the AR2 618 is also released at operation 734.

Although FIG. 7 illustrates an example of an operating process of a UE in a mobile communication network which uses a distributed mobility managing scheme according to an embodiment of the present disclosure, various changes could be made to FIG. 7. For example, although shown as a series of operations, various operations in FIG. 7 could overlap, occur in parallel, occur in a different order, or occur multiple times.

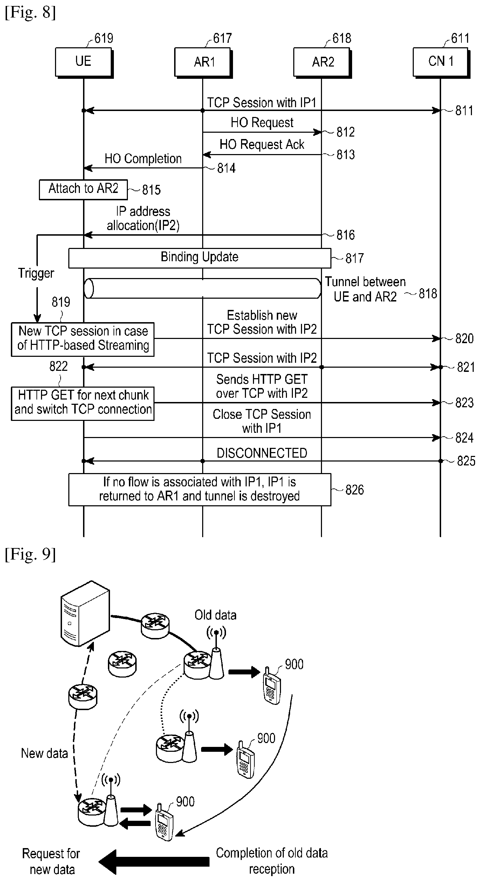

An example of an operating process of a UE in a mobile communication network which uses a distributed mobility managing scheme according to an embodiment of the present disclosure has been described with reference to FIG. 7, and a process of providing an HTTP based video streaming service in each entity in a mobile communication network which uses a distributed mobility managing scheme according to an embodiment of the present disclosure will be described with reference to FIG. 8.

FIG. 8 schematically illustrates a process of providing an HTTP based video streaming service in each entity in a mobile communication network which uses a distributed mobility managing scheme according to an embodiment of the present disclosure.

Referring to FIG. 8, it will be noted that the process of providing the HTTP based video streaming service in each entity in the mobile communication network which uses the distributed mobility managing scheme in FIG. 8 is an operating process of each entity which is performed in a case that it will be assumed that the mobile communication network uses a distributed mobility managing scheme as described in FIG. 6.

The mobile communication network includes a CN1 611, an AR1 617, an AR2 618, and a UE 619.

A TCP connection is established among the CN1 611, the AR1 617, the AR2 618, and the UE 619 using an IP1 at operation 811. It will be assume that the UE 619 attaches to the AR1 617.

The AR1 617 detects that the UE 619 moves from the AR1 617 to the AR2 618 according that the UE 619 moves from the AR1 617 to the AR2 618, so the AR1 617 transmits a handover (HO) request message to the AR2 618 at operation 812. After receiving the HO request message from the AR1 617, the AR2 618 transmits a HO request acknowledgement (ACK) message as a response message to the HO request message to the AR1 617 at operation 813.

After receiving the HO ACK message from the AR2 618, the AR1 617 transmits a HO completion message to the UE 619 at operation 814. After receiving the HO completion message from the AR1 617, the UE 619 attaches to the AR2 618 at operation 815.

The AR2 618 allocates an IP2 to the UE 619 and the UE 619 attaches to the AR2 618 at operation 816. The UE 619 performs a binding update operation with the AR2 618 according that the IP2 is allocated to the UE 619 by the AR2 618 at operation 817. A tunnel is established between the UE 619 and the AR2 618 according that the binding update operation is performed between the UE 619 and the AR2 618 at operation 818.

Upon being allocated the IP2 as a new IP address, the UE 619 detects that the UE 619 should establish a new TCP session (e.g., a TCP session 2) for receiving an HTTP based streaming service at operation 819, and requests to establish the TCP session 2 using the IP2 to the CN1 611 at operation 820.

The TCP session 2 is established among the UE 619, the AR2 618, and the CN1 611 at operation 821. The UE 619 switches from the TCP session 1 as an old TCP session to the TCP session 2 as the new TCP session in order to transmit an HTTP GET message for requesting the next chunk at operation 822. The UE 619 transmits the HTTP GET message which requests the next chunk to the CN1 611 using the IP2 at operation 823. The UE 619 requests to release the TCP session 1 to the CN1 611 using the IP1 in order to release a TCP session which is established between the UE 619 and the CN1 611 (e.g., the TCP session 1). The UE 619 requests to release the TCP session 1 by transmitting a TCP session release request message to the CN1 611 at operation 824.

The TCP session which is established among the UE 619, the AR1 617, and the CN 611 (e.g., the TCP session 1) is released at operation 825. If there is no session which is established using the IP1, the IP1 is returned to the AR1 617. The tunnel which is established between the AR1 617 and the AR2 618 is released at operation 826.

Although FIG. 8 illustrates a process of providing an HTTP based video streaming service in each entity in a mobile communication network which uses a distributed mobility managing scheme according to an embodiment of the present disclosure, various changes could be made to FIG. 8. For example, although shown as a series of operations, various operations in FIG. 8 could overlap, occur in parallel, occur in a different order, or occur multiple times.

A process of providing an HTTP based video streaming service in each entity in a mobile communication network which uses a distributed mobility managing scheme according to an embodiment of the present disclosure has been described with reference to FIG. 8, and a use state of an optimal data transmission path for a UE in a case that each entity provides an HTTP based video streaming service with a scheme in FIG. 8 in a mobile communication network which uses a distributed mobility managing scheme according to an embodiment of the present disclosure will be described with reference to FIG. 9.

FIG. 9 schematically illustrates a use state of an optimal data transmission path for a UE in a case that each entity provides an HTTP based video streaming service with a scheme such as, for example, the scheme illustrated in FIG. 8 in a mobile communication network which uses a distributed mobility managing scheme according to an embodiment of the present disclosure.

Referring to FIG. 9, it will be noted that a use state of an optimal data transmission path for a UE in FIG. 9 is a use state of an optimal data transmission path for a UE in a case that an HTTP based video streaming service is provided as described in FIG. 8.

If a UE 900 moves, a network forwards data to the UE 900, and the UE 900 completes reception of old data which the UE 900 has received (e.g., an old chunk). The UE 900 requests new data (e.g., a new chunk) through an optimal data transmission path which is detected according to movement of the UE 900.

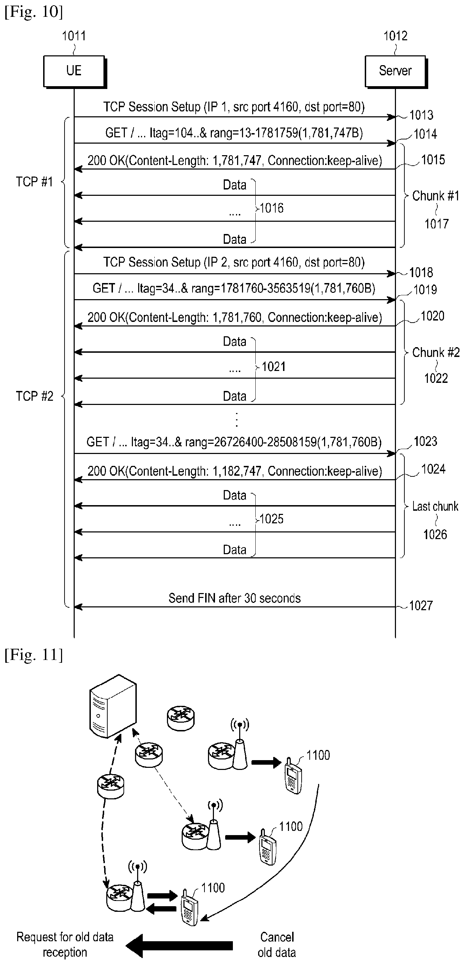

As described in FIG. 9, in a case that a process of providing an HTTP based video streaming service in FIG. 8 is performed, the UE 900 may not receive data through an optimal data transmission path that movement of the UE 900 is reflected before completing reception of an old chunk even though the UE 900 has moved, and this will be described with reference to FIG. 10.

FIG. 10 schematically illustrates an example of a process of transmitting/receiving data using an HTTP based video streaming protocol in a mobile communication network according to an embodiment of the present disclosure.

Referring to FIG. 10, the mobile communication network includes a UE 1011 and a server 1012. It will be assumed that the UE 1011 moves while receiving data corresponding to a chunk #1 1017.

The UE 1011 establishes a TCP session with the server 1012 at operation 1013. The TCP session includes an IP address, a source port, and a destination port. In the TCP session, the IP address is set to "IP1", the source port is set to "4160", and the destination port is set to "80". The UE 1011 requests a specific streaming file (Itag=34) and a specific range of data (range=13-1781759) to the server 1012 on a chunk basis using an HTTP GET message at operation 1014. Each of the Itag and the range is a request Uniform Resource Identifier (URI).

After receiving the HTTP GET message from the UE 1011, the server 1012 transmits an HTTP 200 OK message to the UE 1011 at operation 1015, and transmits data which the UE 1011 requests along with the HTTP 200 OK message to the UE 1011 at operation 1016. The HTTP 200 OK message includes a content-length field and a connection field. A field value of the connection field included in the HTTP 200 OK message is set to "keep-alive", so the TCP session is not released until transmission of data corresponding to one chunk is completed. The HTTP 200 OK message and the next data transmissions become one chunk (e.g., a chunk #1) at operation 1017. Data transmission is performed many times, and this is why a size of one chunk in FIG. 10 is about 1.7MB.

In FIG. 10, because the UE 1011 moves while receiving the data corresponding to the chunk #1, the UE 1011 awaits completion of reception of the data corresponding to the chunk #1. If the reception of the data corresponding to the chunk #1 is completed, the UE 1011 establishes a TCP session with the service 1012 using an IP address which is newly allocated according to the movement of the UE 1011 (e.g., an IP2) to receive remaining data (e.g., data corresponding to a chunk #2 to the last chunk) through the TCP session which is established using the IP2 in order to receive data through an optimal transmission data path, and this will be described below.

The UE 1011 establishes a TCP session with the server 1012 at operation 1018. The TCP session includes an IP address, a source port, and a destination port. In the TCP session, the IP address is set to "IP2", the source port is set to "4160", and the destination port is set to "80". The UE 1011 requests a specific streaming file (Itag=34) and a specific range of data (range=1781760-3563519) to the server 1012 on a chunk basis using an HTTP GET message at operation 1019. After receiving the HTTP GET message from the UE 1011, the server 1012 transmits an HTTP 200 OK message to the UE 1011 at operation 1020, and transmits data which the UE 1011 requests along with the HTTP 200 OK message to the UE 1011 at operation 1021. A field value of a connection field included in the HTTP 200 OK message is set to "keep-alive", so the TCP session is not released until transmission of data corresponding to one chunk is completed. The HTTP 200 OK message and the next data transmissions become one chunk (e.g., a chunk #2) at operation 1022. Data transmission is performed many times, and this is why a size of one chunk in FIG. 10 is about 1.7MB.

In this way, data transmission/reception is performed, the UE 1011 finally requests a specific streaming file (Itag=34) and a specific range of data (range=26726400-28508159) to the server 1012 on a chunk basis using an HTTP GET message at operation 1023. After receiving the HTTP GET message from the UE 1011, the server 1012 transmits an HTTP 200 OK message to the UE 1011 at operation 1024, and transmits data which the UE 1011 requests along with the HTTP 200 OK message to the UE 1011 at operation 1025. A field value of a connection field included in the HTTP 200 OK message is set to "keep-alive", so the TCP session is not released until transmission of data corresponding to one chunk is completed. The HTTP 200 OK message and the next data transmissions become one chunk (e.g., the last chunk) at operation 1026. Data transmission is performed many times, and this is why the size of one chunk in FIG. 10 is about 1.7MB. A size of the last chunk may be less than the sized of one chunk (about 1.7MB).

After transmitting all chunks, the server 1012 transmits a FIN message to the UE 1011 if there is no packet transmission/reception through the TCP session which is established with the UE 1011 during preset time (e.g., 30 seconds), so the TCP session which is established between the UE 1011 and the server 1012 is released at operation 1027.

As described above, the UE 1011 requests transmission of data to the server 1012 on a chunk basis, and the server 1012 transmits the data in response to the data transmission request to the UE 1011. The HTTP 200 OK message may transmit all data on a chunk basis using one TCP session by setting a field value of a connection field to "keep-alive".

For example, the chunk #1 1017 is transmitted/received through the TCP session 1 (e.g., the TPC session which is established using the IP1), and the remaining chunks are transmitted/received through the TCP session 2 (e.g., the TPC session which is established using the IP2).

Although FIG. 10 illustrates an example of a process of transmitting/receiving data using an HTTP based video streaming protocol in a mobile communication network according to an embodiment of the present disclosure, various changes could be made to FIG. 10. For example, although shown as a series of operations, various operations in FIG. 10 could overlap, occur in parallel, occur in a different order, or occur multiple times.

Meanwhile, as described in FIG. 10, if a UE moves while data is transmitted to the UE on a chunk basis, a new IP address is allocated to the UE. Accordingly, a TCP session which uses the new IP address becomes an optimal data transmission path.

However, even though the UE is allocated the new IP address according to movement (e.g., there is an optimal data transmission path for the UE), there may be a case that the UE receives data through a data transmission path which the UE has used before the UE moves not the optimal data transmission path until reception of data for a chunk which the UE has received before the UE moves is completed.

An embodiment of the present disclosure proposes a scheme of optimizing a data transmission path by reflecting a movement state of a UE if the UE moves and transmitting/receiving data through the optimized data transmission path in a mobile communication network which uses a distributed mobility managing scheme, and this will be described with reference to FIG. 11.

FIG. 11 schematically illustrates a process of optimizing a data transmission path by reflecting a movement state of a UE in a case that the UE moves in a mobile communication network according to an embodiment of the present disclosure.

Referring to FIG. 11, if a UE 1100 moves, a network forwards data to the UE 1100, and the UE 1100 requests to cancel transmission for old data (e.g., an old chunk) which the UE 1100 has received to the network. Then, the UE 1100 requests to transmit the old chunk again through an optimal data transmission path which is detected according to the movement of the UE 1100 to the network.

The UE 1100 receives the old chunk through the optimal data transmission path in which the movement of the UE 1100 is reflected again.

As described in FIG. 11, in a mobile communication network according to an embodiment of the present disclosure, if a UE moves, a data transmission path is optimized by reflecting a movement state of the UE, so the UE may receive data which the UE has received before the UE moves through the optimized data transmission path.

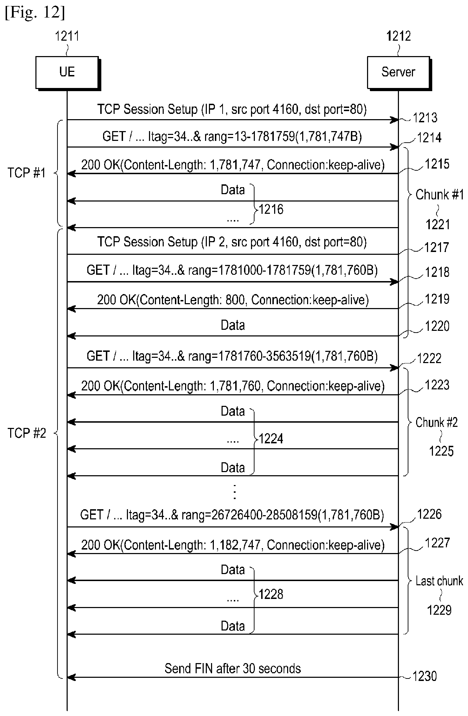

For example, the UE 1100 may receive an old chunk through an optimal data transmission path in which a movement state of the UE 1100 is reflected even though the UE 1100 moves before reception of the old chuck is not completed, and this will be described with reference to FIG. 12.

FIG. 12 schematically illustrates an example of a process of transmitting/receiving data using an HTTP based video streaming protocol in a mobile communication network according to an embodiment of the present disclosure.

Referring to FIG. 12, the mobile communication network includes a UE 1211 and a server 1212. It will be assumed that the UE 1211 moves while receiving data corresponding to a chunk #1 1221.

The UE 1211 establishes a TCP session with the server 1212 at operation 1213. The TCP session includes an IP address, a source port, and a destination port. In the TCP session, the IP address is set to "IP1", the source port is set to "4160", and the destination port is set to "80". The UE 1211 requests a specific streaming file (Itag=34) and a specific range of data (range=13-1781759) to the server 1212 on a chunk basis using an HTTP GET message at operation 1214. Each of the Itag and the range is a request URI.

After receiving the HTTP GET message from the UE 1211, the server 1212 transmits an HTTP 200 OK message to the UE 1211 at operation 1215, and transmits data which the UE 1211 requests along with the HTTP 200 OK message to the UE 1211 at operation 1216. The HTTP 200 OK message includes a content-length field and a connection field. A field value of the connection field included in the HTTP 200 OK message is set to "keep-alive", so the TCP session is not released until transmission of data corresponding to one chunk (e.g., a chunk #1) is completed.

The UE 1211 moves while receiving the data corresponding to the chunk #1 1221, and a new IP address (e.g., an IP2) is allocated to the UE 1211 according to the movement of the UE 1211. The UE 1211 establishes a new TCP session (e.g., a TCP session 2) with the server 1212 using the new IP address (e.g., the IP2). The new TCP session which is newly established by reflecting the movement of the UE 1211 becomes an optimal data transmission path.

For example, in order to receive data though an optimal data transmission path, the UE 1211 establishes the TCP session 2 with the server 1212 using the IP address which is newly allocated to the UE 1211 according to the movement of the UE 1211 (e.g., the IP2), and receives remaining data (e.g., remaining data of the chunk #1 to data corresponding to the last chunk) through the TCP session 2. This will be described below.

The UE 1211 establishes the TCP session 2 with the server 1212 at operation 1217. The TCP session 2 includes an IP address, a source port, and a destination port. In the TCP session 2, the IP address is set to "IP2", the source port is set to "4160", and the destination port is set to "80". The UE 1211 requests a specific streaming file (Itag=34) and a specific range of data (range=1781000-1781759) to the server 1212 on a chunk basis using an HTTP GET message at operation 1218. After receiving the HTTP GET message from the UE 1211, the server 1212 transmits an HTTP 200 OK message to the UE 1211 at operation 1219, and transmits data which the UE 1211 requests along with the HTTP 200 OK message to the UE 1211 at operation 1220. A field value of a connection field included in the HTTP 200 OK message is set to "keep-alive", so the TCP session 2 is not released until transmission of data corresponding to one chunk is completed. The HTTP 200 OK message and the next data transmissions become one chunk (e.g., a chunk #1) at operation 1221. Data transmission is performed many times, and this is why a size of one chunk in FIG. 12 is about 1.7MB.

The UE 1211 requests a specific streaming file (Itag=34) and a specific range of data (range=1781760-3563519) to the server 1212 on a chunk basis using an HTTP GET message at operation 1222. After receiving the HTTP GET message from the UE 1211, the server 1212 transmits an HTTP 200 OK message to the UE 1211 at operation 1223, and transmits data which the UE 1211 requests along with the HTTP 200 OK message to the UE 1211 at operation 1224. A field value of a connection field included in the HTTP 200 OK message is set to "keep-alive", so the TCP session 2 is not released until transmission of data corresponding to one chunk is completed. The HTTP 200 OK message and the next data transmissions become one chunk (e.g., a chunk #2) at operation 1225. Data transmission is performed many times, and this is why a size of one chunk in FIG. 12 is about 1.7MB.

In this way, data transmission/reception is performed, the UE 1211 finally requests a specific streaming file (Itag=34) and a specific range of data (range=26726400-28508159) to the server 1212 on a chunk basis using an HTTP GET message at operation 1226. After receiving the HTTP GET message from the UE 1211, the server 1212 transmits an HTTP 200 OK message to the UE 1211 at operation 1227, and transmits data which the UE 1211 requests along with the HTTP 200 OK message to the UE 1211 at operation 1228. A field value of a connection field included in the HTTP 200 OK message is set to "keep-alive", so the TCP session 2 is not released until transmission of data corresponding to one chunk is completed. The HTTP 200 OK message and the next data transmissions become one chunk (e.g., the last chunk) at operation 1229. Data transmission is performed many times, and this is why the size of one chunk in FIG. 12 is about 1.7MB. A size of the last chunk may be less than the sized of one chunk (about 1.7MB).

After transmitting all chunks, the server 1212 transmits a FIN message to the UE 1211 if there is no packet transmission/reception through the TCP session which is established with the UE 1211 during preset time (e.g., 30 seconds), so the TCP session which is established between the UE 1211 and the server 1212 is released at operation 1230.

As described above, the UE 1211 requests transmission of data to the server 1212 on a chunk basis, and the server 1212 transmits the data in response to the data transmission request to the UE 1211. The HTTP 200 OK message may transmit all data on a chunk basis using one TCP session by setting a field value of a connection field to "keep-alive".

If the UE 1211 moves while data is transmitted to the UE 1211 on a chunk basis, a new IP address is allocated to the UE 1211. A TCP session which uses the new IP address becomes an optimal data transmission path. So, in an embodiment of the present disclosure, upon moving to being allocated the new IP address, the UE 1211 may receive data through the optimal data transmission path.

Although FIG. 12 illustrates an example of a process of transmitting/receiving data using an HTTP based video streaming protocol in a mobile communication network according to an embodiment of the present disclosure, various changes could be made to FIG. 12. For example, although shown as a series of operations, various operations in FIG. 12 could overlap, occur in parallel, occur in a different order, or occur multiple times.

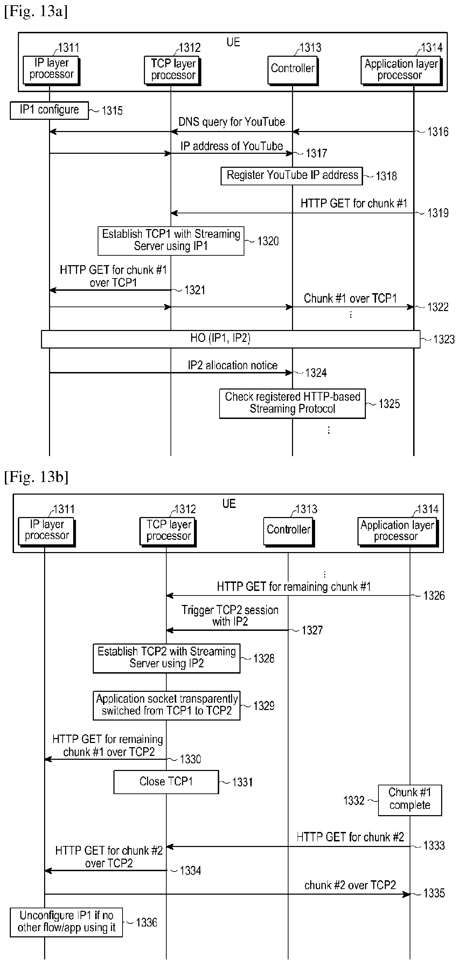

Another example of a process of transmitting/receiving data using an HTTP based video streaming protocol in a mobile communication network according to an embodiment of the present disclosure has been described with reference to FIG. 12, and another example of an operating process of a UE in a mobile communication network which uses a distributed mobility managing scheme according to an embodiment of the present disclosure will be described with reference to FIGS. 13a and 13b.

FIGS. 13a and 13b schematically illustrate an example of an operating process of a UE in a mobile communication network which uses a distributed mobility managing scheme according to an embodiment of the present disclosure.

Referring to FIGS. 13a and 13b, it will be noted that an operating process of a UE in a mobile communication network which uses a distributed mobility managing scheme is an operating process of a UE in a case that it will be assumed that the mobile communication network uses a distributed mobility managing scheme as described in FIGS. 6, 11, and 12.

Referring to FIGS. 13a and 13b, a UE 619 includes an IP layer processor 1311, a TCP layer processor 1312, a controller 1313, and an application layer processor 1314.

After the IP layer processor 1311 configures an IP1 at operation 1315, an application program of the application layer processor 1314 (e.g., a streaming program) requests an IP address of a streaming server using a DNS query message in order to acquire an IP address of a site which the application layer processor 1314 will access at operation 1316. For example, the application layer processor 1314 transmits the DNS query message to the TCP layer processor 1312 through the controller 1313. After receiving the DNS query message from the application layer processor 1314, the TCP layer processor 1312 transmits the DNS query message to the IP layer processor 1311.

After receiving the DNS query message, the IP layer processor 1311 transfers an IP address of the streaming server using a DNS answer message as a response message to the DNS query message to the controller 1313 and the application layer processor 1314 through the TCP layer processor 1312 at operation 1317. It will be assumed that the streaming server is a YouTube^{©} server (e.g., a CN1 611).

After receiving the DNS answer message including the IP address of the streaming server through the TCP layer processor 1312, the controller 1313 detects that the UE 619 uses an HTTP based streaming service through the DNS answer message, and registers the received IP address of the streaming server at operation 1318.

According to various embodiments of the present disclosure, it is detected that the UE 619 uses an HTTP based streaming service based on a DNS (e.g., an operation of transmitting a DNS query message and an operation of receiving a DNS answer message). However, those of ordinary skill in the art will understand that it may be detected that the UE 619 uses an HTTP based streaming service using a DPI scheme, a 5 tuple based scheme, a scheme in which an application program directly registers that the UE 619 uses an HTTP based streaming service, and/or the like. A detailed description of an operation of detecting that the UE 619 uses the HTTP based streaming service will be omitted herein.

The application layer processor 1314 requests a chunk #1 to the TCP layer processor 1312 using an HTTP GET message at operation 1319. After receiving the HTTP GET message from the application layer processor 1314, the TCP layer processor 1312 establishes a TCP session (e.g., a TCP session 1) with the streaming server (e.g., the CN1 611) using the IP1 at operation 1320. The TCP layer processor 1312 requests the chunk #1 to the IP layer processor 1311 using an HTTP GET message at operation 1321. After receiving the HTTP GET message from the TCP layer processor 1312, the IP layer processor 1311 transfers a related chunk (e.g., the chunk #1) to the application layer processor 1314 through the TCP session 1 though the TCP layer processor 1312 and the controller 1313 at operation 1322. While receiving the chunk #1 through the controller 1313, the UE 619 moves from the AR1 617 to the AR2 618 (e.g., the UE 619 hands over from the AR1 617 to the AR2 618), the UE 619 is additionally assigned an IP2 at operation 1323. After an IP address is additionally allocated to the UE 619, the IP layer processor 1311 notifies to the controller 1313 that a new IP address is allocated to the UE 619 at operation 1324.

After receiving the notification indicating that the new IP address is allocated to the UE 619, the controller 1313 determines whether there is a registered HTTP based streaming service at operation 1325. In FIGS. 13a and 13b, because the UE 619 already receives the HTTP based streaming service, the application layer processor 1314 transfers an HTTP GET message which requests to transmit remaining data corresponding to the chunk #1 to the TCP layer processor 1312 at operation 1326. Further, in FIGS. 13a and 13b, because the UE 619 already receives the HTTP based streaming service, the controller 1313 generates a trigger which requests to establish a new session (e.g., a TCP session 2) using the IP2 to the TCP layer processor 1312 at operation 1327.

After receiving the request for establishing the new session from the controller 1313, the TCP layer processor 1312 establishes the TCP session 2 with the streaming server (e.g., the CN1 611) using the IP2 at operation 1328.

After receiving the HTTP GET message which requests to transmit the remaining data corresponding to the chunk #1 from the application layer processor 1314, the TCP layer processor 1312 performs a socket switching operation from the TCP session 1 to the TCP session 2 at operation 1328. For example, the TCP layer processor 1312 changes a socket which an application program uses from the TCP session 1 to the TCP session 2 at operation 1329. The performing of the socket switching operation is performed under a control of the controller 1313.

After performing the application socket switching operation from the TCP session 1 to the TCP session 2, the TCP layer processor 1312 requests the chunk #1 to the IP layer processor 1311 using an HTTP GET message through the TPC session 2 at operation 1330. The TCP layer processor 1312 releases the TCP session 1 at operation 1331.

After detecting that reception of all data for the chunk #1 is completed at operation 1332, the application layer processor 1314 requests a chunk #2 to the TCP layer processor 1312 using an HTTP GET message at operation 1333. After receiving the HTTP GET message which requests to transmit the data for the chunk #2 from the application layer processor 1314, the TCP layer processor 1312 requests the chunk #2 to the IP layer processor 1311 using an HTTP GET message at operation 1334. After receiving the HTTP GET message from the TCP layer processor 1312, the IP layer processor 1311 transfers a related chunk (e.g., the chunk #2) to the application layer processor 1314 through the TCP session 2 through the TCP layer processor 1312 and the controller 1313 at operation 1335.

If there is no session which is established using the IP1 after the application socket switching operation is performed, the IP layer processor 1311 returns the IP1 to the AR1 617. The tunnel which has been established between the AR1 617 and the AR2 618 is also released at operation 1336.

Although FIGS. 13a and 13b illustrate another example of an operating process of a UE in a mobile communication network which uses a distributed mobility managing scheme according to an embodiment of the present disclosure, various changes could be made to FIGS. 13a and 13b. For example, although shown as a series of operations, various operations in FIGS. 13a and 13b could overlap, occur in parallel, occur in a different order, or occur multiple times.

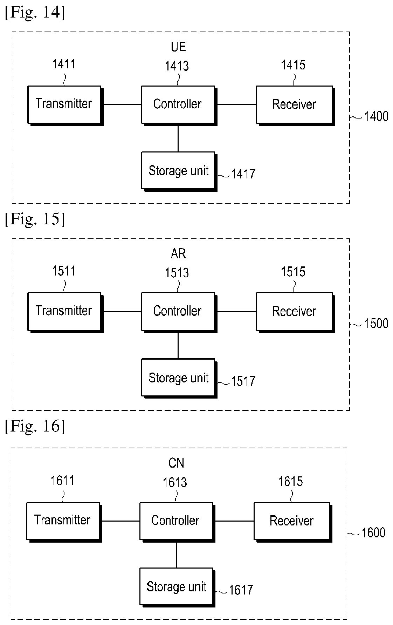

Another example of an operating process of a UE in a mobile communication network which uses a distributed mobility managing scheme according to an embodiment of the present disclosure has been described with reference to FIGS. 13a and 13b, and an inner structure of a UE in a mobile communication network according to an embodiment of the present disclosure will be described with reference to FIG. 14.

FIG. 14 schematically illustrates an inner structure of a UE in a mobile communication network according to an embodiment of the present disclosure.

Referring to FIG. 14, it will be noted that a UE 1400 may be implemented in a form including a controller 511, an application layer processor 512, a TCP layer 513, and an IP layer processor 514 as described in FIG. 5.

The UE 1400 includes a transmitter 1411, a controller 1413, a receiver 1415, and a storage unit 1417.

The controller 1413 controls the overall operation of the UE 1400. More particularly, the controller 1413 controls the UE 1400 to perform an operation related to an operation of providing a streaming service. The operation related to the operation of providing the streaming service is performed in the manner described with reference to FIGS. 5 to 13b and a description thereof will be omitted herein.

The transmitter 1411 transmits various messages, and the like to an AR, a CN, and/or the like under a control of the controller 1413. The various messages, and the like transmitted in the transmitter 1411 have been described in FIGS. 5 to 13b and a description thereof will be omitted herein.

The receiver 1415 receives various messages, and the like from the AR, the CN, and the like under a control of the controller 1413. The various messages, and the like received in the receiver 1415 have been described in FIGS. 5 to 13b and a description thereof will be omitted herein.

The storage unit 1417 stores a program, various data, and/or the like necessary for the operation of the UE 1400, specially, the operation related to the operation of providing the streaming service. The storage unit 1417 stores the various messages, and/or the like received in the receiver 1415.

Although the transmitter 1411, the controller 1413, the receiver 1415, and the storage unit 1417 are described as separate processors, it is to be understood that this is merely for convenience of description. In other words, two or more of the transmitter 1411, the controller 1413, the receiver 1415, and the storage unit 1417 may be incorporated into a single processor.

An inner structure of a UE in a mobile communication network according to an embodiment of the present disclosure has been described with reference to FIG. 14, and an inner structure of an AR in a mobile communication network according to an embodiment of the present disclosure will be described with reference to FIG. 15.

FIG. 15 schematically illustrates an inner structure of an AR in a mobile communication network according to an embodiment of the present disclosure.

Referring to FIG. 15, an AR 1500 includes a transmitter 1511, a controller 1513, a receiver 1515, and a storage unit 1517.

The controller 1513 controls the overall operation of the AR 1500. More particularly, the controller 1513 controls the AR 1500 to perform an operation related to an operation of providing a streaming service. The operation related to the operation of providing the streaming service is performed in the manner described with reference to FIGS. 5 to 13b and a description thereof will be omitted herein.

The transmitter 1511 transmits various messages, and/or the like to a UE, other AR, a CN, and the like under a control of the controller 1513. The various messages, and/or the like transmitted in the transmitter 1511 have been described in FIGS. 5 to 13b and a description thereof will be omitted herein.

The receiver 1515 receives various messages, and/or the like from the UE, the other AR, the CN, and the like under a control of the controller 1513. The various messages, and/or the like received in the receiver 1515 have been described in FIGS. 5 to 13b and a description thereof will be omitted herein.

The storage unit 1517 stores a program, various data, and/or the like necessary for the operation of the AR 1500, specially, the operation related to the operation of providing the streaming service. The storage unit 1517 stores the various messages, and/or the like received in the receiver 1515.

Although the transmitter 1511, the controller 1513, the receiver 1515, and the storage unit 1517 are described as separate processors, it is to be understood that this is merely for convenience of description. In other words, two or more of the transmitter 1511, the controller 1513, the receiver 1515, and the storage unit 1517 may be incorporated into a single processor.

An inner structure of an AR in a mobile communication network according to an embodiment of the present disclosure has been described with reference to FIG. 15, and an inner structure of a CN in a mobile communication network according to an embodiment of the present disclosure will be described with reference to FIG. 16.

FIG. 16 schematically illustrates an inner structure of a CN in a mobile communication network according to an embodiment of the present disclosure.

Referring to FIG. 16, a CN 1600 includes a transmitter 1611, a controller 1613, a receiver 1615, and a storage unit 1617.

The controller 1613 controls the overall operation of the CN 1600. More particularly, the controller 1613 controls the CN 1600 to perform an operation related to an operation of providing a streaming service. The operation related to the operation of providing the streaming service is performed in the manner described with reference to FIGS. 5 to 13b and a description thereof will be omitted herein.

The transmitter 1611 transmits various messages, and/or the like to an AR, and/or the like under a control of the controller 1613. The various messages, and/or the like transmitted in the transmitter 1611 have been described in FIGS. 5 to 13b and a description thereof will be omitted herein.

The receiver 1615 receives various messages, and/or the like from the AR, and the like under a control of the controller 1613. The various messages, and the like received in the receiver 1613 have been described in FIGS. 5 to 13b and a description thereof will be omitted herein.

The storage unit 1617 stores a program, various data, and/or the like necessary for the operation of the CN 1600, specially, the operation related to the operation of providing the streaming service. The storage unit 1617 stores the various messages, and/or the like received in the receiver 1615.

Although the transmitter 1611, the controller 1613, the receiver 1615, and the storage unit 1617 are described as separate processors, it is to be understood that this is merely for convenience of description. In other words, two or more of the transmitter 1611, the controller 1613, the receiver 1615, and the storage unit 1617 may be incorporated into a single processor.

Certain aspects of the present disclosure may also be embodied as computer readable code on a non-transitory computer readable recording medium. A non-transitory computer readable recording medium is any data storage device that can store data, which can be thereafter read by a computer system. Examples of the non-transitory computer readable recording medium include read-only memory (ROM), random-access memory (RAM), CD-ROMs, magnetic tapes, floppy disks, optical data storage devices, and carrier waves (such as data transmission through the Internet). The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

It can be appreciated that a method and apparatus according to an embodiment of the present disclosure may be implemented by hardware, software and/or a combination thereof. The software may be stored in a non-volatile storage, for example, an erasable or re-writable ROM, a memory, for example, a RAM, a memory chip, a memory device, or a memory integrated circuit (IC), or an optically or magnetically recordable non-transitory machine-readable (e.g., computer-readable), storage medium (e.g., a compact disk (CD), a digital versatile disk (DVD), a magnetic disk, a magnetic tape, and/or the like). A method and apparatus according to an embodiment of the present disclosure may be implemented by a computer or a mobile terminal that includes a controller and a memory, and the memory may be an example of a non-transitory machine-readable (e.g., computer-readable), storage medium suitable to store a program or programs including instructions for implementing various embodiments of the present disclosure.

The present disclosure may include a program including code for implementing the apparatus and method as defined by the appended claims, and a non-transitory machine-readable (e.g., computer-readable), storage medium storing the program. The program may be electronically transferred via any media, such as communication signals, which are transmitted through wired and/or wireless connections, and the present disclosure may include their equivalents.

An apparatus according to an embodiment of the present disclosure may receive the program from a program providing device which is connected to the apparatus via a wire or a wireless and store the program. The program providing device may include a memory for storing instructions which instruct to perform a content protect method which has been already installed, information necessary for the content protect method, and the like, a communication unit for performing a wired or a wireless communication with a graphic processing device, and a controller for transmitting a related program to a transmitting/receiving device based on a request of the graphic processing device or automatically transmitting the related program to the transmitting/receiving device.

While the present disclosure has been shown and described with reference to various embodiments thereof, it will be understood by those skilled in the art that various changes in form and details may be made therein without departing from the scope of the present disclosure as defined by the appended claims.

## Claims

1. A method for receiving streaming service data in a user equipment, UE, (619) in a mobile communication network, the method comprising:
receiving a second internet protocol, IP, address from a second access router, AR, (618) if the UE (619) is handed over to the second AR (618) upon detecting that the UE (619) moves from a first AR (617) to the second AR (618) while receiving streaming service data from the first AR (617) through a first transmission control protocol, TCP, session established with a corresponding node, CN, (611) based on a first IP address through the first AR (617);
establishing a second TCP session with the CN (611) based on the second IP address through the second AR (618);
awaiting until a reception of a data unit is completed if the reception of the data unit is not completed, wherein the data unit is included in the streaming service data which the UE (619) has received before the handover has been completed;
switching from the first TCP session to the second TCP session upon detecting the completion of the reception of the data unit; and
receiving the streaming service data from the CN (611) through the second TCP session.

2. The method of claim 1, further comprising:
determining whether there is a session which has been established based on the first IP address; and
returning the first IP address to the first AR (617) if there is no session which has been established based on the first IP address.

3. The method of claim 1, further comprising:
after establishing the second TCP session with the CN (611), transmitting, to the CN (611) using the second IP address, a message requesting to transmit a next chunk of the data unit; and
receive, from the CN (611), the next chunk along with a response message including a content-length field and a connection field, wherein the connection field indicates whether or not to release the first TCP session.

4. A user equipment, UE, (619) for receiving streaming service data in a mobile communication network, wherein the UE (619) is configured to:
receive a second internet protocol, IP, address from a second access router, AR, (618) if the UE (619) is handed over to the second AR (618) upon detecting that the UE (619) moves from a first AR (617) to the second AR (618) while receiving streaming service data from the first AR (617) through a first transmission control protocol, TCP, session established with a corresponding node, CN (611), based on a first IP address through the first AR (617);
establish a second TCP session with the CN (611) based on the second IP address through the second AR (618);
await until a reception of a data unit is completed if the reception of the data unit is not completed, wherein the data unit is included in the streaming service data which the UE (619) has received before the handover has been completed;
switch from the first TCP session to the second TCP session upon detecting the completion of the reception of the data unit; and
receive the streaming service data from the CN (611) through the second TCP session.

5. The UE (619) of claim 4 is further configured to:
determine whether there is a session which has been established based on the first IP address; and
return the first IP address to the first AR (617) if there is no session which has been established based on the first IP address.

6. The UE (619) of claim 4 is further configured to:
after establishing the second TCP session with the CN (611), transmit, to the CN (611), a message requesting to transmit a next chunk of the data unit using the second IP address, and
receive, from the CN (611), the next chunk along with a response message including a content-length field and a connection field, wherein the connection field indicates whether or not to release the first TCP session.

7. A communication system comprising:
a user equipment, UE, (619) according to any of claims 4 to 6;
a first access router, AR, (617);
a second access router, AR, (618); and
a corresponding node, CN, (611);
wherein the first AR (617) configured to:
perform a handover operation for the UE (619) with the second AR (618) upon detecting that the UE (619) moves from the first AR (617) to the second AR (618) while transmitting streaming service data to the UE (619) through a first transmission control protocol, TCP, session established between the corresponding node, CN, (611) and the UE (619) based on a first internet protocol, IP, address; and
releasing the first TCP session with the UE (619) upon detecting that the UE (619) switches from the first TCP session to a second TCP session established with the CN (611) by the UE (619) based on a second IP address allocated to the UE (619) by the second AR (618).

8. The communication system of claim 7, wherein the second AR (618) is configured to:
detecting that the UE (619) moves from the first AR (617) to the second AR (618); and
allocating the second internet protocol, IP, address to the UE (619),
establishing the second TCP session with the UE (619) address or establishing the second TCP session with the UE (619), based on whether reception of a data unit included in the streaming service data which the UE (619) has received in the first TCP session of the UE (619) based on the first IP address before the handover has been completed; and
transmitting streaming service data from the CN through the second TCP session, wherein the second IP address is different from the first IP address.

9. The communication system of claim 8, wherein the second AR (618) is configured to:
release a tunnel which is established with the first AR (617) if there is no session established based on the first IP address after the UE (619) switches from the first TCP session to the second TCP session established with the CN (611) by the UE (619) based on the second IP address.

10. The communication system of claim 7, wherein the corresponding node, CN, (611) is configured to:
establishing the second transmission control protocol, TCP, session with the UE (619) through the second access router, AR, based on the second internet protocol, IP, address allocated to the UE by the second AR (618) upon detecting that the UE (619) moves from the first AR (617) to the second AR (618) while transmitting streaming serviced data through the first TCP session established with the UE (619) through the first AR (617) based on the first IP address; and
transmitting the streaming service data to the UE (619) through the second TCP session.

## Patentansprüche

1. Verfahren zum Empfangen von Streaming-Dienstdaten in einem Benutzergerät, UE, (619) in einem mobilen Kommunikationsnetz, wobei das Verfahren umfasst:
Empfangen einer zweiten Internetprotokoll-, IP-, Adresse von einem zweiten Zugangsrouter, AR, (618), wenn das UE (619) an den zweiten AR (618) übergeben wird, nachdem festgestellt wurde, dass sich das UE (619) von einem ersten AR (617) zu dem zweiten AR (618) bewegt, während es Streaming-Dienstdaten von dem ersten AR (617) über eine erste Übertragungssteuerungsprotokoll-, TCP-, Sitzung empfängt, die mit einem entsprechenden Knoten, CN, (611) auf der Grundlage einer ersten IP-Adresse über den ersten AR (617) eingerichtet wurde;
Aufbau einer zweiten TCP-Sitzung mit dem CN (611) auf der Grundlage der zweiten IP-Adresse über den zweiten AR (618);
Warten, bis der Empfang einer Dateneinheit abgeschlossen ist, wenn der Empfang der Dateneinheit nicht abgeschlossen ist, wobei die Dateneinheit in den Streaming-Dienstdaten enthalten ist, die das UE (619) empfangen hat, bevor der Handover abgeschlossen wurde;
Umschalten von der ersten TCP-Sitzung auf die zweite TCP-Sitzung bei Erkennen des Abschlusses des Empfangs der Dateneinheit; und
Empfangen der Streaming-Dienstdaten vom CN (611) über die zweite TCP-Sitzung.

2. Das Verfahren nach Anspruch 1 umfasst ferner:
Feststellen, ob eine Sitzung auf der Grundlage der ersten IP-Adresse aufgebaut wurde; und
Rückgabe der ersten IP-Adresse an den ersten AR (617), wenn es keine Sitzung gibt, die auf der Grundlage der ersten IP-Adresse aufgebaut worden ist.

3. Das Verfahren nach Anspruch 1 umfasst ferner:
nach dem Aufbau der zweiten TCP-Sitzung mit dem CN (611), Übertragen einer Nachricht an den CN (611) unter Verwendung der zweiten IP-Adresse, die zum Übertragen eines nächsten Stücks der Dateneinheit auffordert; und
vom CN (611) den nächsten Chunk zusammen mit einer Antwortnachricht empfangen, die ein Inhaltslängenfeld und ein Verbindungsfeld enthält, wobei das Verbindungsfeld angibt, ob die erste TCP-Sitzung freigegeben werden soll oder nicht.

4. Ein Benutzerendgerät, UE, (619) zum Empfangen von Streaming-Dienstdaten in einem mobilen Kommunikationsnetzwerk, wobei das UE (619) konfiguriert ist zum:
Empfangen einer zweiten Internetprotokoll-, IP-, Adresse von einem zweiten Zugangsrouter, AR, (618), wenn das UE (619) an den zweiten AR (618) übergeben wird, nachdem festgestellt wurde, dass sich das UE (619) von einem ersten AR (617) zu dem zweiten AR (618) bewegt, während es Streaming-Dienstdaten von dem ersten AR (617) über eine erste Übertragungssteuerungsprotokoll-, TCP-, Sitzung empfängt, die mit einem entsprechenden Knoten, CN (611), auf der Grundlage einer ersten IP-Adresse über den ersten AR (617) eingerichtet wurde;
Aufbau einer zweiten TCP-Sitzung mit dem CN (611) auf der Grundlage der zweiten IP-Adresse über den zweiten AR (618);
Warten, bis der Empfang einer Dateneinheit abgeschlossen ist, wenn der Empfang der Dateneinheit nicht abgeschlossen ist, wobei die Dateneinheit in den Streaming-Dienstdaten enthalten ist, die das UE (619) empfangen hat, bevor der Handover abgeschlossen wurde;
Umschalten von der ersten TCP-Sitzung auf die zweite TCP-Sitzung beim Erkennen des Abschlusses des Empfangs der Dateneinheit; und
Empfangen der Streaming-Dienstdaten vom CN (611) über die zweite TCP-Sitzung.

5. Das UE (619) nach Anspruch 4 ist ferner konfiguriert zum:
Feststellen, ob es eine Sitzung gibt, die auf der Grundlage der ersten IP-Adresse aufgebaut worden ist; und
Zurückgeben der ersten IP-Adresse an den ersten AR (617), wenn es keine Sitzung gibt, die auf der Grundlage der ersten IP-Adresse aufgebaut worden ist.

6. Das UE (619) nach Anspruch 4 ist ferner konfiguriert zum:
Senden, nach dem Aufbau der zweiten TCP-Sitzung mit dem CN (611), einer Nachricht an den CN (611), die die Übertragung eines nächsten Stücks der Dateneinheit unter Verwendung der zweiten IP-Adresse anfordert, und
Empfangen, vom CN (611), des nächsten Chunks zusammen mit einer Antwortnachricht, die ein Inhaltslängenfeld und ein Verbindungsfeld enthält, wobei das Verbindungsfeld angibt, ob die erste TCP-Sitzung freigegeben werden soll oder nicht.

7. Ein Kommunikationssystem mit:
einem Benutzerendgerät, UE, (619) nach einem der Ansprüche 4 bis 6;
einen ersten Zugangsrouter, AR, (617);
einen zweiten Zugangsrouter AR (618); und
einen entsprechenden Knoten, CN, (611);
wobei der erste AR (617) konfiguriert ist zum:
Durchführen einer Übergabeoperation für das UE (619) mit dem zweiten AR (618) bei Erkennen, dass sich das UE (619) vom ersten AR (617) zum zweiten AR (618) bewegt, während es Streaming-Dienstdaten an das UE (619) durch eine erste Übertragungssteuerungsprotokoll-, TCP-, Sitzung überträgt, die zwischen dem entsprechenden Knoten, CN, (611) und dem UE (619) auf der Grundlage einer ersten Internetprotokoll-, IP-, Adresse eingerichtet wurde; und
Freigeben der ersten TCP-Sitzung mit dem UE (619) bei Erkennen, dass das UE (619) von der ersten TCP-Sitzung zu einer zweiten TCP-Sitzung wechselt, die mit dem CN (611) durch das UE (619) auf der Grundlage einer zweiten IP-Adresse eingerichtet wurde, die dem UE (619) durch den zweiten AR (618) zugewiesen wurde.

8. Das Kommunikationssystem nach Anspruch 7, wobei die zweite AR (618) konfiguriert ist zum:
Erkennen, dass sich das UE (619) vom ersten AR (617) zumzweiten AR (618) bewegt; und
Zuweisen der zweiten Internetprotokoll-(IP-)Adresse an das UE (619),
Aufbau der zweiten TCP-Sitzung mit der Adresse des UE (619) oder Aufbau der zweiten TCP-Sitzung mit dem UE (619), basierend darauf, ob der Empfang einer Dateneinheit, die in den Streaming-Dienstdaten enthalten ist, die das UE (619) in der ersten TCP-Sitzung des UE (619) basierend auf der ersten IP-Adresse vor dem Handover empfangen hat, abgeschlossen wurde; und
Übertragen von Streaming-Dienstdaten vom CN über die zweite TCP-Sitzung, wobei sich die zweite IP-Adresse von der ersten IP-Adresse unterscheidet.

9. Das Kommunikationssystem nach Anspruch 8, wobei der zweite AR (618) konfiguriert ist zum:
Auflösen eines Tunnels, der mit dem ersten AR (617) aufgebaut ist, wenn es keine Sitzung gibt, die auf der ersten IP-Adresse basiert, nachdem das UE (619) von der ersten TCP-Sitzung zu der zweiten TCP-Sitzung wechselt, die mit dem CN (611) durch das UE (619) basierend auf der zweiten I P-Adresse aufgebaut wurde.

10. Das Kommunikationssystem nach Anspruch 7, wobei der entsprechende Knoten CN (611) konfiguriert ist zum:
Aufbauen der zweiten Übertragungskontrollprotokoll-, TCP-, Sitzung mit dem UE (619) durch den zweiten Zugangsrouter, AR, basierend auf der zweiten Internetprotokoll-, IP-, Adresse, die dem UE durch den zweiten AR (618) zugewiesen wurde, nach dem Erfassen, dass sich das UE (619) von dem ersten AR (617) zu dem zweiten AR (618) bewegt, während es Streaming-bediente Daten durch die erste TCP-Sitzung, die mit dem UE (619) durch den ersten AR (617) basierend auf der ersten IP-Adresse aufgebaut wurde, überträgt; und
Übermitteln der Streaming-Dienstdaten an das UE (619) über die zweite TCP-Sitzung.

## Revendications

1. Procédé pour recevoir des données de service en continu dans un équipement utilisateur, UE, (619) dans un réseau de communication mobile, le procédé comprenant :
recevoir une deuxième adresse de protocole Internet, IP, d'un deuxième routeur d'accès, AR, (618) si l'UE (619) est transféré au deuxième AR (618) lors de la détection du fait que l'UE (619) passe d'un premier AR (617) au deuxième AR (618) tout en recevant des données de service de diffusion en continu du premier AR (617) par l'intermédiaire d'une première session de protocole de contrôle de transmission, TCP, établie avec un noeud correspondant, CN, (611) sur la base d'une première adresse IP par l'intermédiaire du premier AR (617) ;
établir une seconde session TCP avec le CN (611) basée sur la seconde adresse IP par l'intermédiaire du second AR (618) ;
attendre jusqu'à ce qu'une réception d'une unité de données soit terminée si la réception de l'unité de données n'est pas terminée, dans lequel l'unité de données est incluse dans les données de service de diffusion en continu que l'UE (619) a reçues avant que le transfert ne soit terminé ;
passer de la première session TCP à la seconde session TCP lors de la détection de l'achèvement de la réception de l'unité de données ; et
recevoir les données du service de streaming du CN (611) par l'intermédiaire de la seconde session TCP.

2. Procédé de la revendication 1, comprenant en outre :
déterminer s'il existe une session qui a été établie sur la base de la première adresse IP ; et
renvoyer la première adresse IP au premier AR (617) s'il n'y a pas de session qui a été établie sur la base de la première adresse IP.

3. Procédé de la revendication 1, comprenant en outre :
après avoir établi la deuxième session TCP avec le CN (611), transmettre, au CN (611) en utilisant la deuxième adresse IP, un message demandant de transmettre un morceau suivant de l'unité de données ; et
recevoir, à partir du CN (611), le morceau suivant avec un message de réponse comprenant un champ de longueur de contenu et un champ de connexion, dans lequel le champ de connexion indique s'il faut ou non libérer la première session TCP.

4. Equipement d'utilisateur, UE, (619) pour recevoir des données de service en continu dans un réseau de communication mobile, dans lequel l'UE (619) est configuré pour :
recevoir une deuxième adresse de protocole Internet, IP, d'un deuxième routeur d'accès, AR, (618) si l'UE (619) est transféré au deuxième AR (618) lors de la détection du fait que l'UE (619) se déplace d'un premier AR (617) au deuxième AR (618) tout en recevant des données de service de streaming du premier AR (617) par l'intermédiaire d'une première session de protocole de contrôle de transmission, TCP, établie avec un noeud correspondant, CN (611), sur la base d'une première adresse IP par l'intermédiaire du premier AR (617) ;
établir une seconde session TCP avec le CN (611) basée sur la seconde adresse IP par l'intermédiaire du second AR (618) ;
attendre jusqu'à ce qu'une réception d'une unité de données soit terminée si la réception de l'unité de données n'est pas terminée, dans lequel l'unité de données est incluse dans les données de service de diffusion en continu que l'UE (619) a reçues avant que le transfert ne soit terminé ;
passer de la première session TCP à la seconde session TCP lors de la détection de l'achèvement de la réception de l'unité de données ; et
recevoir les données du service de streaming du CN (611) par l'intermédiaire de la seconde session TCP.

5. UE (619) de la revendication 4 est en outre configuré pour :
déterminer s'il existe une session qui a été établie sur la base de la première adresse IP ; et
renvoyer la première adresse IP au premier AR (617) s'il n'y a pas de session qui a été établie sur la base de la première adresse IP.

6. UE (619) de la revendication 4 est en outre configuré pour :
après avoir établi la deuxième session TCP avec le CN (611), transmettre, au CN (611), un message demandant de transmettre un morceau suivant de l'unité de données en utilisant la deuxième adresse IP, et
recevoir, à partir du CN (611), le morceau suivant avec un message de réponse comprenant un champ de longueur de contenu et un champ de connexion, dans lequel le champ de connexion indique s'il faut ou non libérer la première session TCP.

7. Un système de communication comprenant :
un équipement utilisateur, UE, (619) selon l'une quelconque des revendications 4 à 6 ;
un premier routeur d'accès, AR, (617) ;
un deuxième routeur d'accès, AR, (618) ; et
un noeud correspondant, CN, (611) ;
dans lequel le premier AR (617) est configuré pour :
exécuter une opération de transfert pour l'UE (619) avec le deuxième AR (618) lors de la détection du fait que l'UE (619) passe du premier AR (617) au deuxième AR (618) tout en transmettant des données de service de diffusion en continu à l'UE (619) par l'intermédiaire d'une première session de protocole de commande de transmission, TCP, établie entre le noeud correspondant, CN, (611) et l'UE (619) sur la base d'une première adresse de protocole Internet, IP ; et
libérer la première session TCP avec l'UE (619) en détectant que l'UE (619) passe de la première session TCP à une seconde session TCP établie avec le CN (611) par l'UE (619) sur la base d'une seconde adresse IP attribuée à l'UE (619) par le second AR (618).

8. Système de communication de la revendication 7, dans lequel le second AR (618) est configuré pour :
détecter que l'UE (619) se déplace du premier AR (617) au second AR (618) ; et
attribuer la deuxième adresse de protocole Internet, IP, à l'UE (619),
établir la deuxième session TCP avec l'adresse de l'UE (619) ou établir la deuxième session TCP avec l'UE (619), selon que la réception d'une unité de données incluse dans les données du service de diffusion en continu que l'UE (619) a reçues dans la première session TCP de l'UE (619) basée sur la première adresse IP avant le transfert a été achevée ; et
transmettre des données de service de streaming à partir du CN par l'intermédiaire de la seconde session TCP, dans lequel la seconde adresse IP est différente de la première adresse IP.

9. Système de communication de la revendication 8, dans lequel le second AR (618) est configuré pour :
libérer un tunnel qui est établi avec le premier AR (617) s'il n'y a pas de session établie sur la base de la première adresse IP après que l'UE (619) ait commuté de la première session TCP à la seconde session TCP établie avec le CN (611) par l'UE (619) sur la base de la seconde adresse IP.

10. Système de communication de la revendication 7, dans lequel le noeud correspondant, CN, (611) est configuré pour :
établir la deuxième session de protocole de contrôle de transmission, TCP, avec l'UE (619) par l'intermédiaire du deuxième routeur d'accès, AR, sur la base de la deuxième adresse de protocole Internet, IP, attribuée à l'UE par le deuxième AR (618) lors de la détection du fait que l'UE (619) se déplace du premier AR (617) au deuxième AR (618) tout en transmettant des données desservies en continu par l'intermédiaire de la première session TCP établie avec l'UE (619) par l'intermédiaire du premier AR (617) sur la base de la première adresse IP ; et
transmettre les données du service de streaming à l'UE (619) par l'intermédiaire de la seconde session TCP.
